# FASCICULE DE BREVET EUROPEEN

(11) **EP 2 766 607 B1**
(45) Date de publication et mention de la délivrance du brevet: **04.05.2016**
(21) Numéro de dépôt: 12781384.8
(22) Date de dépôt: 09.10.2012
(51) Int. Cl.: F04D 3/02, F04D 29/64, F03B 7/00

(54) **VIS D'ARCHIMEDE ET INSTALLATION DU TYPE POMPE OU CENTRALE HYDROELECTRIQUE EQUIPEE D'AU MOINS UNE TELLE VIS**
ARCHIMEDISCHE SCHRAUBE UND PUMPENANLAGE ODER WASSERKRAFTWERK MIT MINDESTENS EINER SOLCHEN SCHRAUBE
ARCHIMEDEAN SCREW AND INSTALLATION OF THE PUMP OR HYDROELECTRIC POWER STATION TYPE FITTED WITH AT LEAST ONE SUCH SCREW

(30) Priorité: 10.10.2011 FR 1159125
(43) Date de publication de la demande: 20.08.2014
(73) Titulaire: NSC ENVIRONNEMENT (SOCIÉTÉ PAR ACTIONS SIMPLIFIÉE, 68500 Guebwiller (FR)
(72) Inventeur: SCHAFFHAUSER, Jean-Baptiste, F-68610 Lautenbach (FR)
(74) Mandataire: Nuss, Laurent
(86) Numéro de dépôt international: PCT/FR2012/052295
(87) Numéro de publication internationale: WO 2013/054037

(56) Documents cités:
- FR-A- 515 042
- FR-A1- 2 417 655
- US-A- 1 458 850
- US-A1- 2009 062 597
- US-B1- 7 726 331

## Description

La présente invention concerne le domaine des vis d'Archimède, plus particulièrement le domaine des vis d'Archimède équipant des installations du type pompe de relevage ou de convoyage de matériaux liquides ou solides ou du type centrale hydroélectrique et a pour objet une vis d'Archimède. Elle a également pour objet une installation de ce type mettant en oeuvre au moins une telle vis d'Archimède.

On connaît déjà des pompes de relevage ou de convoyage, ci-après dénommées pompes, ou des centrales hydroélectriques comprenant chacune au moins une vis d'Archimède s'étendant dans une auge ou autre moyen de réception, dans une orientation horizontale ou inclinée de ladite vis.

Une vis d'Archimède utilisée dans une pompe de ce type sert à relever, d'un point bas à un point haut, ou à convoyer, dans un plan sensiblement horizontal ou incliné, de forts débits de matériaux liquides ou solides, tandis qu'une vis d'Archimède utilisée dans une centrale de ce type sert à transformer l'énergie hydraulique, procurée par les chutes d'eau des rivières ou autres cours d'eau, en énergie électrique.

Une telle vis d'Archimède est généralement réalisée en chaudronnerie lourde et comprend une âme métallique cylindrique se prolongeant axialement à chacune de ses extrémités par un arbre ou bout d'arbre de transmission apte à être maintenu dans un palier respectivement inférieur ou supérieur et un ou plusieurs filets continus fixés autour de ladite âme sur sa surface de révolution cylindrique ou surface latérale.

Dans le cas d'un fonctionnement d'une vis d'Archimède dans une installation du type centrale hydroélectrique, la rotation de la vis assimilée à une turbine est réalisée grâce à la force hydraulique de l'eau exerçant une action sur le ou chaque filet et entraîne une génératrice électrique, tandis qu'un multiplicateur mécanique, chargé de multiplier la vitesse de rotation de la vis, est disposé dans le prolongement de l'axe de la vis, au dessus du palier supérieur.

Dans le cas d'un fonctionnement d'une vis d'Archimède dans une installation du type pompe, on retrouve les mêmes éléments constituant la vis d'Archimède que dans le cas précédent, hormis la génératrice qui est alors un moteur et le multiplicateur de vitesse qui est alors un réducteur de vitesse, le ou chaque filet exerçant lors de la rotation de la vis une action sur l'eau.

Par ailleurs, une telle vis d'Archimède est disposée dans l'auge concernée en laissant un faible jeu entre celle-ci et ladite vis, généralement de l'ordre de 5 à 10 mm. Pour réaliser ce jeu, la vis d'Archimède est usinée afin de respecter cette cote, ce qui entraîne une opération de tournage très couteuse.

D'autre part, l'âme d'une vis d'Archimède utilisée dans ce type de pompe ou de centrale hydroélectrique consiste usuellement en un tube en acier conçu pour assurer la rigidité de la vis et présentant généralement une longueur de l'ordre de 5 à 8 mètres et un diamètre de la vis de 0.5 à 4 mètres.

Des exemples d'installation du type pompe ou centrale hydroélectrique mettant en oeuvre une vis d'Archimède sont donnés dans le document DE 41 39 134 qui décrit une vis d'Archimède constituée par un corps de vis, intégrant un filet de vis, supporté, dans une auge, par un palier supérieur et un palier inférieur, en étant plus ou moins incliné. En mode de fonctionnement dans une installation du type pompe ladite vis est adaptée de manière à pouvoir relever l'eau, dans l'auge et le long du corps de vis, grâce à la rotation de ce dernier, ce depuis un point bas jusqu'à un point haut. En mode de fonctionnement dans une installation du type centrale hydroélectrique, ladite vis est adaptée de manière à pouvoir générer de l'énergie grâce à la rotation de la vis sous l'effet de l'écoulement de l'eau dans l'auge et le contact de celle-ci sur le filet de la vis, ce depuis le point haut de cette dernière, alimenté en eau, jusqu'à son point bas.

Plusieurs techniques de fabrication permettent actuellement de réaliser des vis de ce type et notamment du ou de chaque filet entourant le corps cylindrique de ces dernières. Une technique de fabrication connue consiste à réaliser le filet de la vis par laminage au moyen d'un laminoir spécial avec des rouleaux non parallèles permettant d'obtenir un filet en une seule pièce. Plus précisément, elle consiste à laminer une bande métallique en l'écrasant près des bords. La matière écrasée s'étend alors latéralement avec pour effet d'augmenter la largeur de la bande et longitudinalement avec pour effet de forcer la bande à se vriller sur elle-même de manière à adopter une forme proche de celle désirée. Le filet de vis ainsi constitué est soudé sur l'âme métallique de la vis.

Quelque soit la technique de fabrication de la vis précitée, celle-ci, une fois réalisée, est ensuite usinée par tournage pour obtenir le jeu très faible entre celle-ci et l'auge ou la gouttière.

Toutefois, les techniques de formation actuelles d'un filet de vis sont artisanales et exigent un savoir faire humain difficile à acquérir. En outre, elles sont difficiles à mettre en oeuvre industriellement et donc très coûteuses.

Par ailleurs, la soudure du ou des filets sur l'âme doit être parfaite afin de garantir une résistance efficace de l'ensemble et assurer une longue durée de fonctionnement.

D'autre part, les matériaux employés actuellement pour la réalisation des vis d'Archimède n'empêchent pas la formation d'oxydation. En particulier, échauffement des matériaux métalliques au moment de la soudure modifie leurs propriétés et les rend plus sensibles à la corrosion qui fragilise rapidement l'ensemble de la vis lorsqu'elle est localisée sur ou à proximité des zones de soudure.

Enfin, la taille des vis d'Archimède actuelles mises en oeuvre dans de telles installations nécessite l'emploi de convois routiers exceptionnels qui sont très chers.

Ainsi, les coûts élevés de production et de transport des vis d'Archimède actuelles freinent considérablement leur commercialisation et le développement des énergies renouvelables d'origine hydraulique moins chères et plus écologiques.

La présente invention a pour but de pallier ces inconvénients en proposant une vis d'Archimède présentant des coûts de fabrication d'installation, de maintenance et de transport inférieurs à ceux des vis d'Archimède actuelles, tout en permettant le remplacement d'une partie endommagée par une autre ou le remplacement d'une partie par une autre partie de caractéristiques différentes.

Le document FR 515042 A a pour objet un système d'assemblage de tronçons de vis d'Archimède, se présentant sous la forme d'éléments de tube portant les spires (filets) de la vis, avec des axes formant tourillon en leur milieu et pénétrant dans les extrémités des éléments de tubes pour réaliser leur connexion entre eux. Plus particulièrement, le système comprend un dispositif de manchonnage constitué par deux manchons dont le diamètre extérieur est égal à celui d'un élément de tube portant la vis. Les manchons sont assemblés entre eux par l'intermédiaire d'un axe d'accouplement s'engageant à chacune de ses extrémités dans l'une des extrémités desdits manchons. Les deux manchons sont séparés l'un de l'autre par une douille traversée par ledit axe et portant un tourillon fixé sur la face externe latérale de la douille. Chaque manchon est assemblé par son autre extrémité à l'un des éléments de tube portant la vis par l'intermédiaire d'une portée. Cette dernière comporte une extrémité de plus petit diamètre engagée dans le manchon, tandis que son autre extrémité de plus grand diamètre est engagée à force dans le tube. En outre, la face latérale externe de chaque manchon comprend une partie de la vis soudée sur cette dernière à l'autogène et vient dans le prolongement de la face latérale externe de l'élément de tube adjacent. Chaque manchon est constitué par deux demi-coquilles qui se rejoignent autour de la partie de plus petit diamètre de la portée.

Toutefois, en cas de partie, notamment de portion de filet, endommagée, le système du document FR 515 042 A nécessite le changement ou le remplacement de tout l'élément de tube ou de tout le manchon portant ladite partie de filet endommagée ainsi que le démontage de celui-ci du système d'assemblage comprenant les portées et l'axe d'accouplement. En outre, un tel système qui présente une grande complexité d'assemblage et un encombrement elevé ne permet pas d'obtenir des coûts de fabrication, d'installation, de maintenance et de transport réduits.

Le document US 2009/062597 A1 a pour objet un rotor prévu pour être mis en oeuvre, en tant que pompe sanguine, dans le système vasculaire d'un patient. Le rotor comprend un moyeu supportant au moins une lame comportant une pluralité de lamelles fixées définitivement sur le moyeu et disposées en hélice autour de ce dernier. Dans une variante, les lamelles sont pliables au niveau de leur base de fixation. En outre, les lamelles sont montées l'une par rapport à l'autre en se chevauchant au niveau de leur extrémité libre et sont écartées l'une de l'autre au niveau de leurs bases.

Toutefois, un rotor de très petite taille du type de celui décrit dans le document US 2009/062597 A1, qui est plus particulièrement adapté pour être mis en oeuvre dans le système vasculaire d'un patient, n'est pas adapté pour former une pompe de relevage ou de convoyage ou autre installation utilisant une vis d'Archimède du type centrale hydroélectrique et présente une structure qui ne permet pas, à l'échelle de ladite pompe ou installation, de réduire les coûts de fabrication et de transport, ni de remplacer au moins une partie, notamment une portion du filet, endommagée, ni de changer au moins une partie, notamment une portion de filet, par une autre partie présentant des caractéristique différentes.

A cet effet, la vis d'Archimède, selon la présente invention, comprend une âme de forme tubulaire délimitée latéralement par une surface de révolution ou surface latérale et au moins un filet fixé autour de ladite âme sur sa surface latérale, des moyens de maintien et de transmission, du type arbres de transmission, permettant le maintien et la rotation de ladite vis d'Archimède autour de son axe et se caractérise essentiellement en ce que :
- le ou chaque filet est modulaire et démontable et est constitué par une juxtaposition d'aubes constituant chacune une portion du ou de l'un des filet(s), chaque aube présentant une étendue surfacique et un contour adaptés pour permettre la reconstitution du filet à réaliser et comprenant une partie d'assemblage permettant l'assemblage, de façon amovible, de l'aube concernée avec la surface latérale de l'âme,
- des moyens de fixation permettent d'assurer une liaison complète rigide et démontable entre la partie d'assemblage de chaque aube et ladite surface latérale, ce directement sur ladite surface ou par l'intermédiaire d'un support de fixation solidaire de cette dernière,
- l'âme, éventuellement modulaire et démontable, présente une section transversale circulaire ou polygonale.

La présente invention a également pour objet une installation du type pompe ou centrale hydroélectrique comprenant une ou plusieurs vis d'Archimède, selon la présente invention, la ou chaque vis d'Archimède étant munie à chacune de ses extrémités d'un arbre de transmission, ladite installation comprenant au moins une auge apte à recevoir la ou au moins l'une desdites vis d'Archimède et deux paliers aptes chacun à recevoir l'un des arbres de transmission de la ou l'une desdites vis d'Archimède en vue de permettre son maintien et sa rotation dans ladite auge et, le cas échéant, au moins un moteur permettant d'entraîner la ou chaque vis d'Archimède en rotation et se caractérisant en ce que la ou chaque auge est modulaire et démontable et présente une forme tubulaire cylindrique de section circulaire ou en arc de cercle réalisée à partir d'un assemblage de plaques incurvées rigides, de préférence du type tôle, de section transversale en arc de cercle, chaque plaque incurvée rigide comportant des plis parallèles entre eux et rapprochés l'un de l'autre lui conférant sa forme en arc de cercle.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure 1 montre une vue en perspective partielle et schématique d'une vis d'Archimède selon la présente invention,
- la figure 2 montre une vue en perspective partielle de l'âme d'une vis d'Archimède selon la présente invention, dans un mode de réalisation préférentiel de cette dernière où l'âme est modulaire et démontable, dans un premier mode de réalisation de ladite âme et dans un premier mode de réalisation de son armature,
- la figure 3 montre une vue en coupe transversale de l'âme d'une vis d'Archimède selon la présente invention, dans un mode de réalisation préférentiel de cette dernière où l'âme est modulaire et démontable, dans un premier mode de réalisation de ladite âme et dans un deuxième mode de réalisation de son armature,

- la figure 4 montre une vue en perspective partielle d'une vis d'Archimède selon la présente invention, dans un mode de réalisation particulier de cette dernière où l'âme n'est pas modulaire,
- la figure 5 montre l'âme représentée sur la figure 4 dans une variante où celle-ci est rendue modulaire et démontable,
- la figure 6 montre une vue en perspective d'une aube d'une vis d'Archimède selon la présente invention, dans un mode de réalisation préférentiel de ladite aube, plus particulièrement adaptée pour être fixée sur une âme de section polygonale,
- la figure 7 montre une vue en perspective d'une aube d'une vis d'Archimède selon la présente invention, dans un mode de réalisation préférentiel de ladite aube, plus particulièrement adaptée pour être fixée sur une âme de section polygonale, dans une forme et des dimensions différentes de l'aube représentée sur la figure 6,
- la figure 8 montre une vue en perspective partielle d'une vis d'Archimède selon la présente invention avec une âme de section circulaire, dans une configuration où chaque aube est adaptée pour être fixée directement sur la surface latérale cylindrique de ladite âme,
- la figure 9 montre une vue en perspective partielle d'une vis d'Archimède selon la présente invention avec une âme de section circulaire, dans une configuration où chaque aube est adaptée pour être fixée sur la surface latérale cylindrique de ladite âme par l'intermédiaire d'un support solidaire de ladite surface,
- la figure 10 montre une vue en perspective partielle d'une vis d'Archimède selon la présente invention, avec une âme de section octogonale et dont les aubes sont munies chacune d'une étrave,
- la figure 11 montre une vue en perspective d'une aube d'une vis d'Archimède selon la présente invention, dans un mode de réalisation particulier où ladite aube est réalisée en fonte,

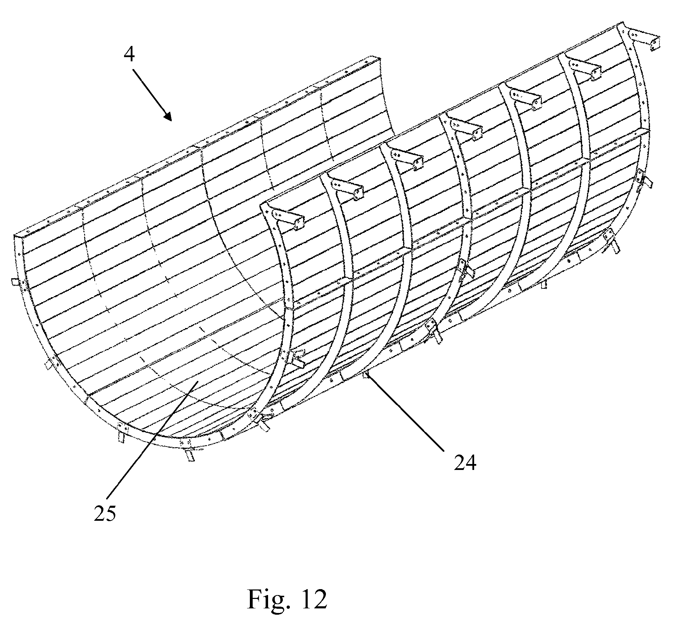

- la figure 12 montre une vue en perspective d'une auge d'une installation selon la présente invention du type pompe de relevage ou centrale hydroélectrique, dans un mode de réalisation préférentielle de ladite auge,
- la figure 13 montre une vue en perspective d'une installation du type pompe de relevage ou centrale hydroélectrique mettant en oeuvre une vis d'Archimède, selon la présente invention, placée dans une auge telle que celle représentée sur la figure 12, emprisonnée dans un lit de béton.
- la figure 14 montre une vue en perspective d'une installation du type pompe de relevage ou centrale hydroélectrique mettant en oeuvre un dispositif selon la présente invention dans laquelle la vis est placée dans une structure autoporteuse.

Les figures montrent une vis d'Archimède, selon la présente invention, destinée plus particulièrement à être mise en oeuvre dans une installation du type pompe ou centrale hydraulique, ladite vis comprenant une âme 1 de forme tubulaire délimitée latéralement par une surface de révolution ou surface latérale et au moins un filet 2 fixé autour de ladite âme 1 sur sa surface latérale et des moyens de maintien 3 du type arbres de transmission permettant le maintien et la rotation de ladite vis d'Archimède autour de son axe.

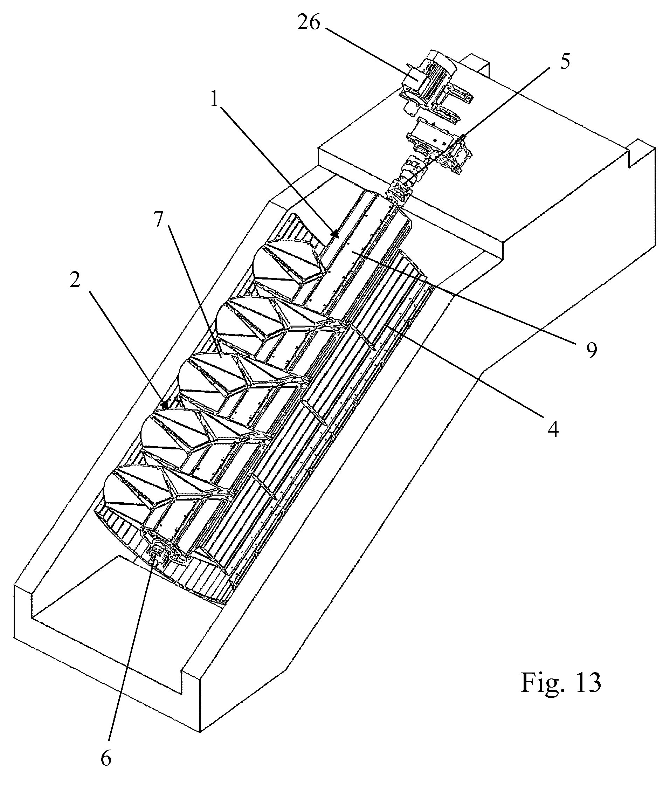

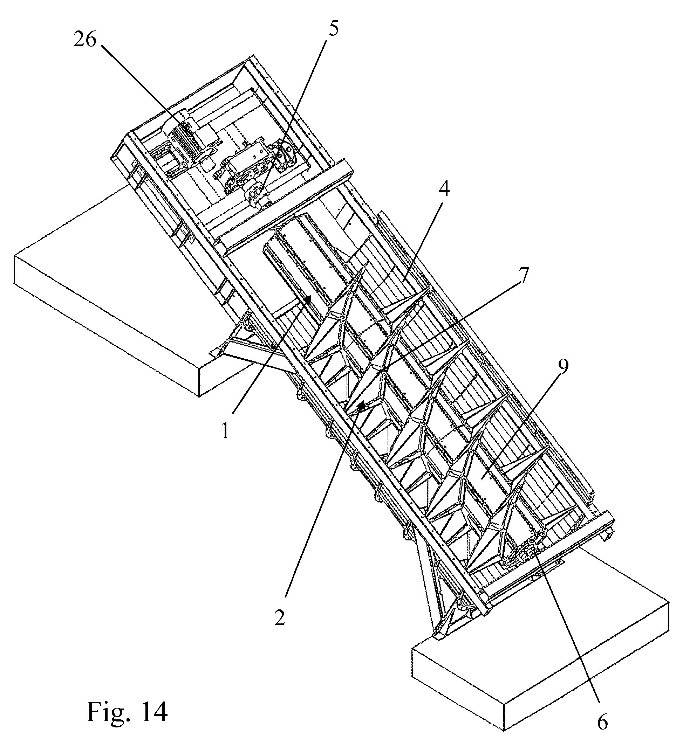

De préférence, pour permettre le maintien et la rotation de ladite vis d'Archimède autour de son axe, notamment dans un moyen de réception du type auge 4, chaque extrémité de ladite âme 1 peut se prolonger axialement par un arbre de transmission 3 apte à être maintenu dans un palier 5 ou 6 (figure 13 et figure 14).

Par ailleurs, on notera que, selon la présente invention, le terme auge est à prendre dans un sens général et peut comprendre une auge simple ou combiné par exemple avec un lit de béton, éventuellement emprisonnée dans ce dernier.

Conformément à la présente invention, le ou chaque filet 2 est rendu modulaire et démontable en étant constitué par une juxtaposition d'aubes 7 formant chacune une section ou une portion du ou de l'un des filet(s) 2 à réaliser. Chaque aube 7 présente, notamment, une étendue surfacique et un contour adaptés pour permettre la reconstitution du ou de chaque filet 2 à réaliser et comprend une partie d'assemblage 70, qui peut être intégrée ou rapportée, permettant l'assemblage, de façon amovible, de l'aube 7 concernée avec la surface latérale de l'âme 1.

On notera que chaque aube 7 peut également comprendre au moins une partie de raccordement 70', pouvant comporter des trous 70" de fixation, de préférence taraudés, aptes à recevoir des moyens de fixation du type vis, permettant le raccordement rigide de chaque aube 7 avec au moins une aube 7 adjacente.

En outre, toujours conformément à la présente invention, des moyens de fixation, tels que des vis ou moyens analogues, permettent d'assurer une liaison complète rigide et démontable entre la partie d'assemblage 70 de chaque aube 7 et la surface latérale de l'âme 1 adaptée à cet effet, ce directement sur ladite surface ou par l'intermédiaire d'un support 8 de fixation solidaire de cette dernière.

Un tel support 8 peut être prévu selon la présente invention pour être soit intégré dans la surface latérale de l'âme 1, soit rapporté et fixé sur cette dernière. On comprendra que la vis d'Archimède, selon la présente invention, peut comprendre au moins un support 8, continu ou non, apte à s'étendre le long de la ligne de fixation du filet 2 à réaliser sur la surface latérale de l'âme 1.

Chaque aube 7 peut donc être fixée de façon amovible sur l'âme 1, directement ou par l'intermédiaire d'un support 8, en vue de la réalisation du ou de chaque filet 2 de la vis 1, ce de sorte à rendre le ou chaque filet 2 entièrement démontable, par section ou portion de filet d'extension surfacique déterminée en fonction du nombre de sections de filet souhaité pour la réalisation du ou de chaque filet 2.

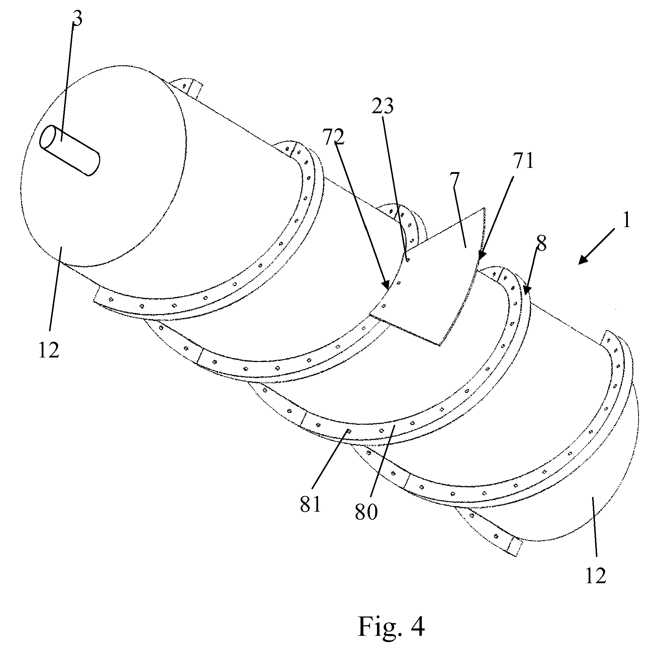

Dans un mode de réalisation préférentiel du dispositif selon la présente invention, l'âme 1 peut être avantageusement modulaire et démontable. Toutefois, dans un mode de réalisation particulier de la présente invention, l'âme 1 peut ne pas être modulaire et démontable et peut consister, par exemple, en un tube réalisé d'une seule pièce, de section transversale cylindrique (figure 4) ou polygonale fermé par des éléments d'extrémité 12. Chaque élément d'extrémité 12, qui peut consister en un flasque, peut être prévu pour porter l'un des arbres de transmission 3 intégré dans ou rapporté sur ce dernier.

Dans un premier mode de réalisation de l'âme 1 modulaire et démontable, celle-ci peut présenter une section transversale polygonale lui conférant une forme globalement prismatique droite, dont la surface latérale est composée de plusieurs faces latérales 11 sensiblement rectangulaires. En outre la surface latérale de l'âme 1 peut être constituée par une juxtaposition d'éléments de surface latérale 9 ou tuiles, aptes à être fixés, de façon amovible, sur une armature 10, de préférence modulaire et démontable. D'autre part, la présente invention peut prévoir des joints d'étanchéité, non représentés, entre chaque tuile 9 et l'armature 10. En outre, chaque tuile 9 peut être adaptée pour s'étendre, à l'état monté de l'âme 1, d'une part, longitudinalement sur tout ou partie de la longueur de cette dernière et, d'autre part, latéralement, sur au moins l'une desdites faces rectangulaires 11.

Par ailleurs, pour assurer une plus grande solidité de la fixation de chaque aube 7 sur une telle surface latérale constituée de tuiles 9, les moyens de fixation de la partie d'assemblage 70 de chaque aube 7 sur ladite surface latérale de l'âme 1 peuvent être prévus pour assurer de préférence une pression de liaison non pas uniquement, ce qui peut être prévu par la présente invention, entre la partie d'assemblage 70 de chaque aube 7 et la tuile 9 concernée formant une surface support pour ladite aube 7, mais, de préférence, entre la partie d'assemblage 70 de ladite aube 7, la tuile 9 concernée et l'armature 10. Cette dernière peut comprendre à cet effet une ou plusieurs surfaces réceptrices aptes à recevoir lesdits moyens de fixation. Ainsi, dans le cas de moyens de fixation consistant en des vis, chaque vis peut alors être prévue pour traverser la partie d'assemblage 70 de l'aube 7 concernée et l'épaisseur de la tuile 9 concernée en venant se visser dans la surface réceptrice concernée de l'armature 10. On comprendra alors que la solidité de la fixation sera de préférence essentiellement procurée par le vissage de chaque vis dans l'armature 10 et donc par la pression de liaison exercée par chaque vis sur la partie d'assemblage 70 de l'aube 7 concernée et la surface réceptrice concernée de l'armature 10.

De préférence, la présente invention peut prévoir soit des tuiles 9 ayant chacune une longueur sensiblement égale à la longueur de l'âme 1, soit des tuiles 9 de même longueur, inférieure à la longueur de l'âme 1, soit une combinaison de ces deux alternatives avec des tuiles 9 de longueurs différentes.

On entendra par longueur d'une tuile 9, selon la présente invention, son extension surfacique, à l'état monté de l'âme 1, dans le sens de la longueur ou de l'axe de l'âme 1.

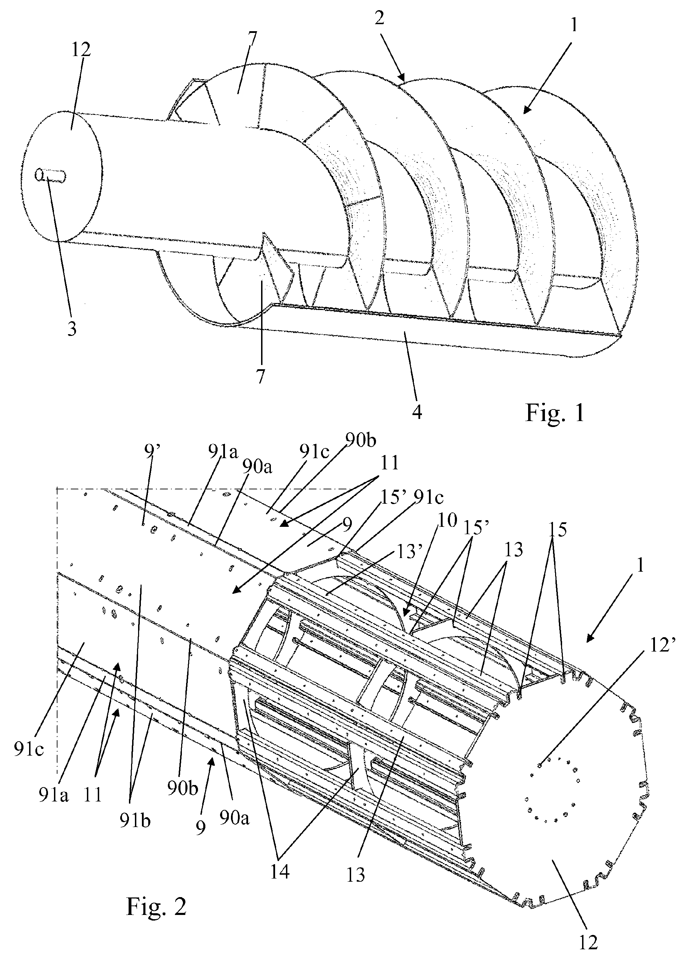

Ainsi, comme on peut le voir sur la figure 2, par exemple, dans le cas d'une âme 1 de section octogonale, la présente invention peut prévoir, par exemple, des tuiles 9 de même longueur, dont la longueur est égale sensiblement à la moitié de la longueur de l'âme 1 à réaliser. En outre, chaque tuile 9 de cette longueur peut s'étendre, à l'état monté de l'âme 1, par exemple, sur une ou deux faces latérales. Une telle âme 1 de section octogonale selon la présente invention peut alors comprendre huit tuiles 9, dont une seule est représentée sur la figure 2.

A cet effet, chaque tuile 9 peut comprendre au moins un ou plusieurs plis 90a, 90b délimitant plusieurs plans 91a, 91b, 91c inclinés entre eux de manière que chaque tuile 9 puisse recouvrir ou s'étendre sur au moins une arête ou sommet formant l'intersection entre deux faces latérales 11 de la surface latérale de l'âme 1 de section polygonale (figure 2 et figure 4).

Si on se réfère maintenant à la figure 2, on peut voir que, dans un premier mode de réalisation de l'armature 10, celle-ci peut être modulaire et démontable et présenter la forme générale d'une cage d'écureuil et peut comprendre, d'une part, une paire de flasques 12 portant chacun l'un des arbres de transmission 3 et présentant chacun un contour, de préférence, polygonal correspondant sensiblement au contour polygonal d'une section de l'âme 1. Chaque flasque 12 polygonal peut être prévu préférentiellement pour former et, de préférence, fermer de façon étanche, l'une des extrémités de l'âme 1 de section polygonale en s'étendant sensiblement perpendiculairement à l'axe de cette dernière. D'autre part, des barres 13 de renfort et de maintien ou autres éléments droits allongés et rigides telles que, par exemple, des profilés de section transversale en U, en T ou en I, peuvent être aptes à être montée(s) chacun(e), plus particulièrement au niveau de leurs extrémités, sur le contour polygonal des flasques 12, de préférence à proximité de chaque arête ou sommet de leur contour polygonal. De telles barres 13 peuvent alors s'étendre, à l'état monté de l'armature 10, perpendiculairement aux plans des flasques 12 et parallèlement à l'axe de l'âme 1.

Les barres 13 peuvent alors former une surface support prête à recevoir et à supporter les tuiles 9, ce en vue de la réalisation de la surface latérale, de préférence étanche, de l'âme 1.

Chaque flasque 12 peut comporter des perçages 12' permettant de fixer, par exemple par vissage, un arbre de transmission 5 non représenté sur la figure 2.

Dans une variante d'une telle armature 10, notamment dans le cas d'une âme 1 de grande longueur, comme on peut le voir sur la figure 2, l'âme 1 peut avantageusement comprendre en outre au moins une pièce intermédiaire 14, pleine ou ajourée, présentant, de préférence, un contour polygonal sensiblement de même forme et de même dimension que celui de l'âme 1 prismatique de section polygonale. En outre, les barres 13 peuvent alors être aptes à être montées également sur le contour polygonal de la ou de chaque pièce intermédiaire 14 disposée entre les deux flasques 12 d'extrémité.

Une pièce intermédiaire 14 peut être de préférence ajourée et plus particulièrement évidée, en présentant par exemple une forme d'anneau ou de bague (figure 2), afin de réduire le poids de la vis 1.

Dans une forme préférentielle, chaque barre 13 profilée peut avoir une section transversale en U et chaque flasque 12 et, le cas échéant, la ou chaque pièce intermédiaire 14, peut comporter des rainures 15, le cas échéant 15', de réception pratiquées dans leurs contours polygonaux respectifs, de préférence à proximité d'une arête du contour concerné, parallèlement à cette dernière et plus préférentiellement deux rainures 15, le cas échéant 15', situées de part et d'autre de chaque arête du contour polygonal correspondant. Les rainures 15 peuvent être aptes à recevoir chacune l'une des ailes desdits profilés en U, en un point de ces derniers, avec le fond de chaque profilé en U appliqué contre le contour polygonal de l'un desdits flasques 12 ou, le cas échéant de la ou de l'une desdites pièces intermédiaires 14 (figure 2).

Les barres 13 peuvent être fixées, de préférence de manière amovible, par exemple par vissage, sur les flasques 12 et, le cas échéant, sur les pièces intermédiaire 14.

Lorsque l'âme 1 de section octogonale est de grande longueur, par exemple de l'ordre de six mètres de long, la présente invention peut prévoir, par exemple, de disposer deux flasques 12, seize barres 13 d'environ six mètres de long, deux par face longitudinale et de préférence chacune à proximité de l'une des deux arêtes ou sommets délimitant ladite face concernée, deux pièces intermédiaires 14 placées à des intervalles, de deux mètres et, par exemple, de douze tuiles 9 de deux mètres de long, chaque tuile 9 recouvrant deux des huit faces de la surface latérale de l'âme 1 de section octogonale.

Chaque barre 13 peut alors former avantageusement l'une des surfaces réceptrices de l'armature 10 aptes à recevoir les moyens de fixation des aubes 7. Dans ce mode de réalisation de l'âme 1, avec une armature en forme de cage d'écureuil, chaque aube 7 peut alors être fixée sur la surface latérale de ladite âme 1 constituée par les tuiles 9, grâce à des moyens de fixation tels que des vis, non représentées, aptes à assurer chacune une pression de liaison entre la partie d'assemblage 70 de ladite aube 7, la tuile 9 concernée et l'une des barre 13. Chaque barre 13, formant l'une des surfaces réceptrices de l'armature 13, peut alors comporter des trous 13', de préférence taraudés, susceptibles chacun de recevoir une telle vis de fixation traversant également la tuile 9 correspondante qui comporte à cet effet des trous 9'.

Des trous, non visibles sur la figure 2, de préférence taraudés, peuvent être pratiqués dans le contour de chaque flasque 12, le cas échéant de chaque pièce intermédiaire 14 de sorte à permettre la fixation, grâce à des vis ou des moyens de fixation analogues, d'une part, des barres 13 sur les contours des flasques 12 et, le cas échéant, sur les contours des pièces intermédiaires 14.

On notera que la présente invention, peut prévoir une forme particulière de l'armature 2 en cage d'écureuil ne comportant pas de tuiles 9. Dans ce cas les aubes 7 peuvent être fixées directement sur une ou plusieurs barres 13, de préférence sur deux ou plusieurs barres d'une même face latérale.

Ainsi, une fois assemblé, l'ensemble des éléments constitutifs de l'armature 10 et de l'âme 1, constitue globalement une cage d'écureuil de forte résistance et d'une grande précision géométrique. En effet, les flasques 12 et la ou les pièces intermédiaires 14 forment des pièces détachées démontables qui peuvent être réalisées, de préférence, à partir de tôles prédécoupées, par exemple à l'aide d'un Laser, d'un jet d'eau très haute pression ou de cisailles.

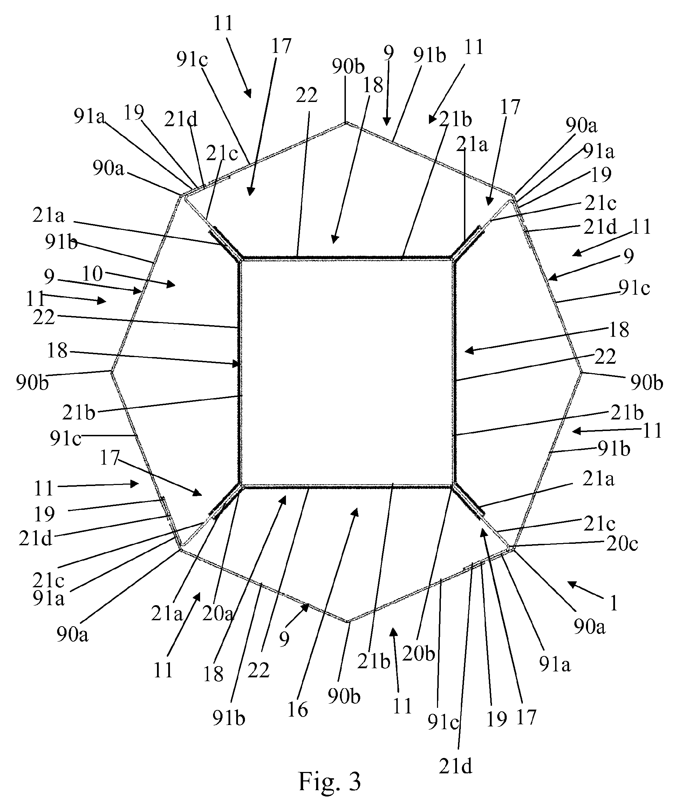

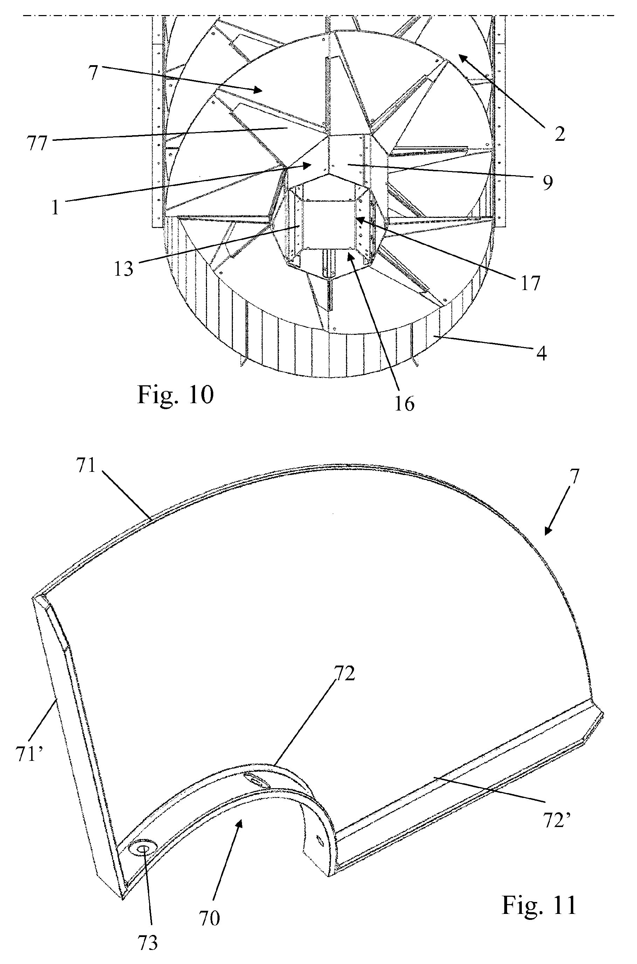

Dans un deuxième mode de réalisation de l'armature 10, celle-ci peut être constituée, d'une part, par un noyau 16 rigide tubulaire de section transversale polygonale et d'axe formant l'axe de l'âme 1 et, d'autre part, par des ailettes 17 qui peuvent faire saillie radialement de la surface latérale dudit noyau 16 en s'étendant longitudinalement sur ce dernier, de préférence, de sorte que chaque bord longitudinal libre d'une ailette 17 puisse former l'un(e) des arêtes ou sommets de la surface latérale de l'âme 1 polygonale. Par ailleurs, le noyau 16 peut être réalisé à partir d'un assemblage d'éléments d'armature 18 rigides, plats et pliés, consistant chacun, de préférence, en une tôle pliée (figures 3 et 10).

Plus précisément, de préférence, chaque élément d'armature 18 peut être conformé pour réaliser en tant que tel, d'une part, une face latérale 11 rectangulaire du noyau 16, sur tout ou partie de sa longueur et, d'autre part, une ailette 17, sur toute ou partie de sa longueur.

Le bord longitudinal libre de chaque ailette 17 peut se prolonger par une surface d'appui et de fixation 19 et les surfaces d'appui et de fixation 19 peuvent servir à la fixation des tuiles 9 prévues pour venir en appui sur ces dernières. En outre, des moyens de fixation, tels que des vis ou moyens analogues, non représentées, peuvent assurer une liaison complète, rigide et démontable entre les tuiles 9 et les surfaces d'appui et de fixation 19.

Dans une forme de réalisation préférentielle de chaque élément d'armature 18, en forme de plaque ou de tôle, celui- ci peut comprendre trois plis longitudinaux 20a, 20b et 20c parallèles entre eux s'étendant, à l'état monté, parallèlement à l'axe du noyau 16, à savoir un premier pli 20a formant l'intersection entre un premier plan 21a et un deuxième plan 21b inclinés entre eux, un deuxième pli 20b formant l'intersection entre le deuxième plan 21 b et un troisième plan 21c inclinés entre eux, un troisième pli 20c formant l'intersection entre le troisième plan 21c et un quatrième plan 21d.

Le premier plan 21a a pour fonction de permettre l'assemblage de l'un des éléments d'armature 18 ou premier élément d'armature 18 avec un autre élément d'armature 18, ou second élément d'armature 18, adjacent angulairement avec le premier élément d'armature 18. Le deuxième plan 21b forme l'une des faces du noyau 16 tubulaire de section polygonale, sur au moins une partie de la longueur de ce dernier ou de ladite face. Le troisième plan 21c forme l'une des ailettes 17, sur au moins une partie de la longueur du noyau 16, tandis que le quatrième plan 21d forme un retour dont la face externe constitue l'une des surfaces d'appui et de fixation 19 permettant la fixation, de préférence amovible, des tuiles 9 sur l'âme 1 ainsi réalisée.

De préférence, par exemple, pour réaliser un noyau 16 tubulaire de section transversale présentant la forme polygonale particulière d'un carré et comprenant quatre ailettes 17 s'étendant chacune depuis l'un des sommets dudit carré, comme on peut le voir sur la figure 3, la présente invention peut prévoir que le premier plan 21a de chaque élément d'armature 18 soit incliné par rapport au deuxième plan 21b d'un angle d'environ 135 degrés, que le deuxième plan 21b soit incliné par rapport au troisième plan 21c d'un angle d'environ 135 degrés et que le troisième plan 21c soit incliné par rapport au quatrième plan 21d d'un angle d'environ 60 degrés.

En outre, toujours dans cet exemple de noyau 16 de section carrée, les tuiles 9 peuvent être au nombre de quatre et peuvent comprendre chacune deux plis 90a et 90b délimitant trois plans 91 a, 91 b et 91c, à savoir un premier pli 90a formant l'intersection entre un premier plan 91a et un deuxième plan 91b inclinés entre eux d'environ 120° et un deuxième pli 91b formant l'intersection entre le deuxième plan 91b et un troisième plan 91c inclinés entre eux d'environ 120 degrés. Ceci de sorte que chaque tuile 9 soit en contact avec deux éléments d'armature 18 adjacents angulairement et plus particulièrement avec les deux surfaces d'appui 19 respectives desdits éléments d'armature 18 adjacents (figure 3).

Ainsi, toujours dans le cas particulier du noyau de section carrée, la présente invention peut prévoir que chaque tuile 9 puisse être assemblée avec deux éléments d'armature 18 adjacents angulairement, à savoir un premier élément d'armature 18 et un second élément d'armature 18, en fixant, de préférence par vissage au moyens de vis non représentées, d'une part, le premier plan 91a de la tuile 9 concernée avec le quatrième plan 21d du premier élément d'armature 18 concerné et, d'autre part, le troisième plan 91c de ladite tuile 9 avec le quatrième plan 21d du second élément d'armature 18 concerné.

On comprendra que chaque surface d'appui et de fixation 19 du quatrième plan 21d de chaque élément d'armature 18 peut constituer, de préférence, une surface d'appui et de fixation 19 commune pour deux tuiles 9 adjacentes angulairement, l'une étant contact sur une partie de ladite surface d'appui et de fixation 19 par au moins une partie de son premier plan 91a et l'autre étant en contact sur l'autre partie de ladite surface d'appui et de fixation 19 par au moins une partie de son troisième plan 91c.

D'autre part, dans le cas où chaque face latérale du noyau 16 tubulaire est réalisée par une juxtaposition longitudinale de plusieurs éléments d'armature 18, la présente invention peut prévoir avantageusement que lesdits éléments d'armature 18 puissent être rendus solidaires entre eux par l'intermédiaire d'éléments de liaison 22 tels que des éclisses (figure 3).

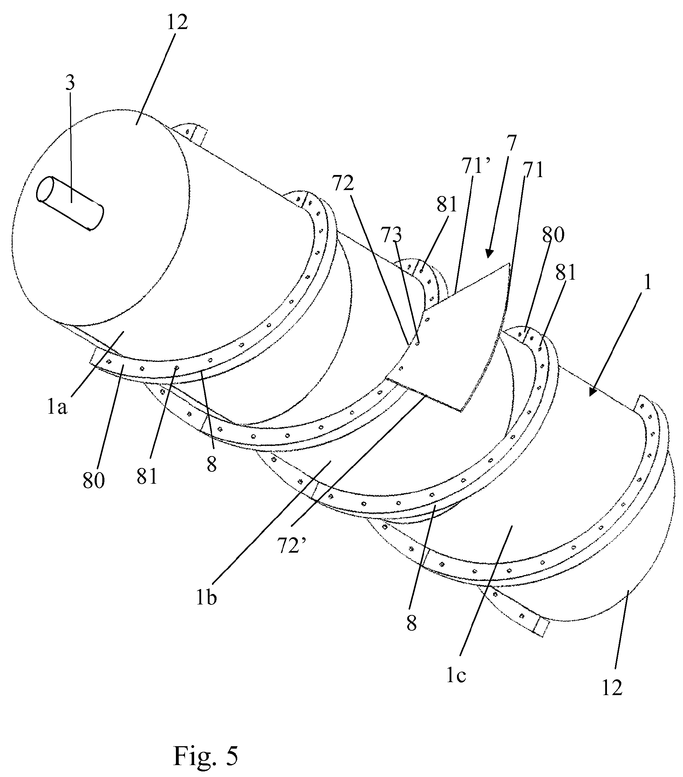

Dans un deuxième mode de réalisation de l'âme 1, celle-ci peut présenter la forme d'un tube cylindrique modulaire constitué par l'assemblage de plusieurs modules 1a, 1b et 1c ou tronçons tubulaires cylindriques mis bout à bout et des moyens de fixation, non représentés, tels que par exemple des vis ou analogues, peuvent assurer entre ces derniers une liaison complète rigide et démontable (figure 5).

Dans ce deuxième mode de réalisation, dans le cas où la présente invention prévoit au moins un support 8 pour la fixation du ou de chaque filet 2 à réaliser, chaque module 1a, 1b ou 1c peut comporter une partie ou une section du support 8 concerné de manière à pouvoir reconstituer, après montage et assemblage desdits modules 2a, 2b et 2c, le support 8 du ou de chaque filet 2 concerné avec mise en continuité desdites parties du support 8 concerné.

Ainsi, grâce à la présente invention, la conception modulaire et la fixation par des moyens de fixation telles que des vis, assurant une liaison complète rigide et démontable entre les différents éléments constitutifs de l'âme 1 de la vis 1, autorisent une livraison et un transport de l'âme 1 en pièces détachées, ce qui réduit notablement les frais de transport par rapport aux vis d'Archimède actuelles. En outre l'assemblage d'une telle âme 1 est aisé et peut même être confié à et mis en oeuvre par l'acheteur lui-même.

On comprendra que les aubes 7, dans ce mode de réalisation préférentiel, peuvent être fixées les unes aux autres par leurs côtés latéraux 71' et 72' formant chacun une partie de raccordement 70' venant contre, par chevauchement, une partie de raccordement 70' d'une aube 7 adjacente.

Dans un mode de réalisation préférentiel, chaque aube 7 peut présenter une forme globalement trapézoïdale comportant deux côtés sensiblement parallèles à savoir un premier côté ou grande base 71, de préférence courbe, de sorte à former une portion du contour courbe du filet 2 concerné et un deuxième côté ou petite base 72 rectiligne ou courbe. En outre, la partie d'assemblage 70 de chaque aube 7 sur la surface latérale de l'âme 1 peut être rapportée sur ou intégrée dans ladite aube 7 et peut s'étendre au niveau ou à proximité de la petite base 72.

De préférence, la petite base 72 peut être courbe dans le cas d'une âme 1 de section circulaire et rectiligne dans le cas d'une âme 1 de section polygonale.

D'autre part, les deux autres côtés 71' et 72' de chaque aube 7 peuvent former chacun, par rapport à la petite base 72, notamment lorsque celle-ci est rectiligne, un angle sensiblement égal à 90° + 180/N où N est le nombre d'aubes 7 qu'il est nécessaire de juxtaposer pour couvrir 360° du filet correspondant de la vis 1.

Plus particulièrement, dans le cas où l'âme 1 est de section polygonale de n faces, alors les deux autres côtés 71', 72'de chaque aube 7 peuvent former un angle par rapport à la petite base 72 droite égal à 90 + 180/n degrés.

Ainsi, par exemple, lorsque l'âme 1 est octogonale et que l'on choisit de disposer huit aubes 7 pour couvrir 360 degrés du filet 2 concerné de la vis 1, alors l'angle que fait un des côtés 71' ou 72' de chaque aube 7 trapézoïdale avec la petite base rectiligne est de: 90 + 180/8 = 112.5 degrés.

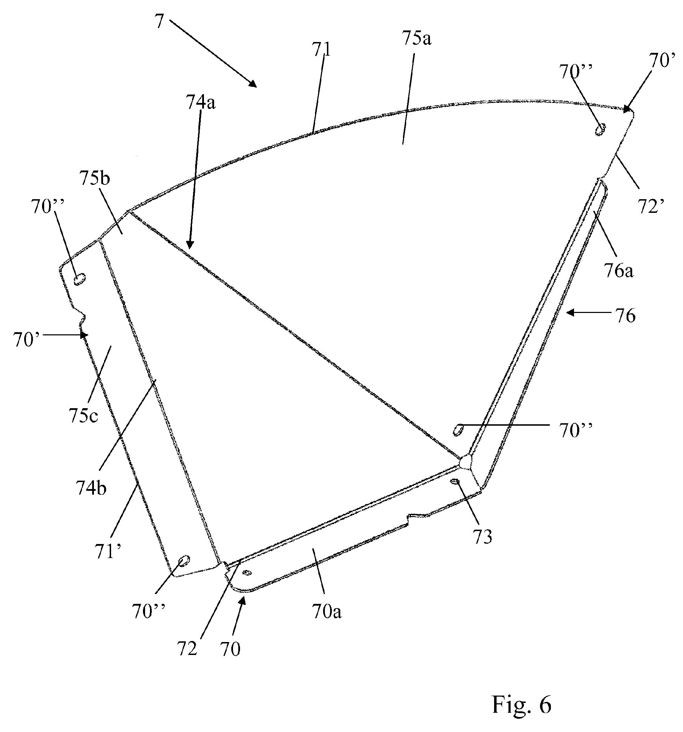

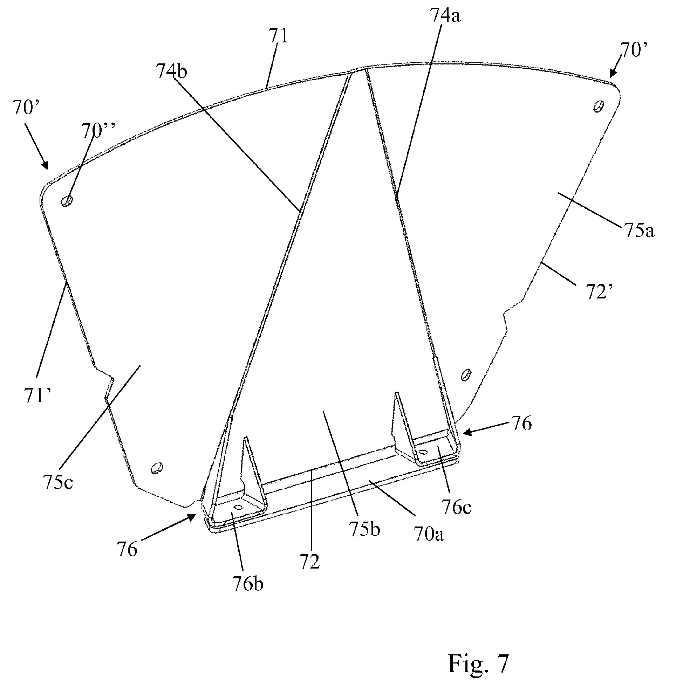

Dans un premier mode de réalisation de la partie d'assemblage 70 de chaque aube 7 celle-ci peut consister soit en une pièce d'assemblage 70a unique, de préférence plate et rigide (figures 6 et 7), soit en plusieurs pièces d'assemblage 70b, de préférence plates et rigides, la ou chaque pièce d'assemblage 70a ou 70b étant intégrée dans ou rapportée et fixée sur l'aube 7 concernée. En outre, la ou chaque pièce d'assemblage 70a ou 70b, peut comprendre, d'une part, une surface de contact et d'assemblage, droite ou courbe, apte à venir en appui sur la surface latérale de l'âme 1 et, d'autre part, des trous de fixation 73 permettant le passage de moyens de fixation du type vis aptes à assurer une liaison complète, rigide et démontable entre la ou les pièces d'assemblage 70a ou 70b et la surface latérale de l'âme 1 comprenant des trous 23 de fixation, d'axe sensiblement parallèle au plan de l'aube 7 concernée, aptes à recevoir lesdits moyens de fixation.

Dans une première caractéristique de ce premier mode de réalisation de la partie d'assemblage 70 de chaque aube 7, l'âme 1 peut présenter une section transversale polygonale et la partie d'assemblage 70 de chaque aube 7 peut consister en une unique pièce d'assemblage 70a rigide comportant une surface de fixation plane susceptible de venir en appui de fixation sur l'une des faces latérales 11 rectangulaires de la surface latérale de ladite âme 1.

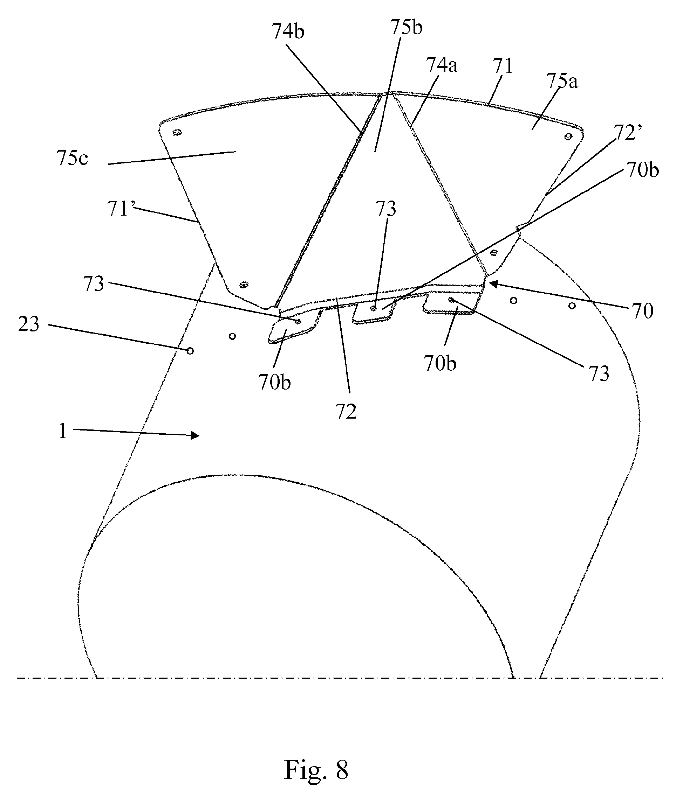

Dans une deuxième caractéristique de ce premier mode de réalisation de la partie d'assemblage 76 de chaque aube 7, l'âme 1 peut présenter une section transversale circulaire et la partie d'assemblage 70 de chaque aube 7 peut consister en plusieurs pièces d'assemblage 70b rigides comportant chacune une surface de fixation plane, lesdites surfaces de fixation planes étant inclinées entre elles de sorte à former une surface de fixation résultant desdites surfaces susceptible de venir en appui de fixation sur la surface latérale cylindrique de ladite âme 1 (figure 8) en épousant sensiblement cette dernière.

Dans une troisième caractéristique, non représentée, de ce premier mode de réalisation de la partie d'assemblage 70 de chaque aube 7, l'âme 1 peut présenter une section transversale circulaire et la partie d'assemblage 70 de chaque aube 7 peut consister en une pièce d'assemblage 70a unique ou en une pluralité de pièces de d'assemblage 70b comprenant chacune une surface de fixation courbe, présentant une courbure sensiblement identique à celle de la surface latérale cylindrique de l'âme 1, susceptible de venir en appui de fixation sur cette dernière en l'épousant au mieux.

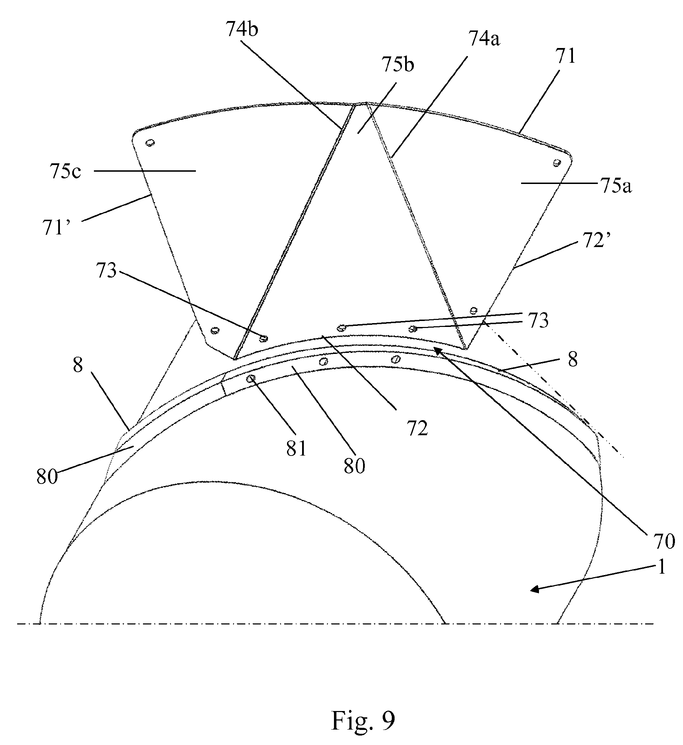

Dans un deuxième mode de réalisation de la partie d'assemblage 70 de chaque aube 7, chaque aube 7 peut être fixée sur la surface latérale de l'âme 1 par l'intermédiaire du support 8 concerné qui comporte à cet effet au moins une face de fixation 80, s'étendant de préférence sensiblement perpendiculairement de la surface latérale de l'âme 1. En outre, la partie d'assemblage 70 de chaque aube 7 peut consister en une surface de fixation 70c intégrée dans cette dernière en s'étendant dans le plan de ladite aube 7, de préférence à proximité de la petite base 72. D'autre part la partie d'assemblage 70 de chaque aube 7 peut comprendre des trous 73 de fixation, d'axes sensiblement perpendiculaire au plan de l'aube 7, permettant le passage de moyens de fixation du type vis aptes à assurer une liaison complète, rigide et démontable entre ladite surface de fixation 70c et la face de fixation 80 correspondante du support 8 concerné qui comporte à cet effet des trous 81 de fixation, de préférence taraudés, aptes à recevoir lesdits moyens de fixation (figure 9). La surface de fixation 70c de chaque aube 7 peut alors être apte à venir en appui de fixation contre la face de fixation 80 du support 8 concerné.

De préférence, chaque aube 7 peut comporter un ou plusieurs plis 74a et 74b délimitant plusieurs plans 75a, 75b et 75c et le ou chaque pli 74a ou 74b peut s'étendre linéairement depuis la petite base 72 jusqu'à la grande base 71 de l'aube 7 correspondante.

Dans une forme préférentielle de chaque aube 7, la présente invention peut prévoir que chaque aube 7 comprenne deux plis 74a et 74b pouvant s'étendre l'un de l'autre depuis chaque extrémité de la petite base 72 de l'aube 7 correspondante, en convergeant l'un vers l'autre, de préférence à proximité de la grande base 71 de ladite aube 7.

Le ou les plis 74a et 74b de chaque aube 7 permettent de respecter la géométrie du ou de chaque filet 2 et en particulier de se rapprocher du profil théorique d'un filet 2 obtenu de manière conventionnelle, notamment par laminage ou estampage.

Ainsi, en juxtaposant plusieurs aubes 7, de préférence en tôle, présentant chacune au moins un pli 74a ou 74b, il est possible de s'approcher au mieux du profil théorique. En outre, le ou les plis 74a et/ou 74b de chaque aube 7 ajoutent de la rigidité aux aubes 7, ce qui permet la mise en oeuvre d'aubes 7, notamment de tôles, plus fines.

D'autre part, chaque aube 7 peut comporter des moyens de renfort 76 intégrés dans ou rapportés sur l'aube 7 correspondante.

Dans une premier mode de réalisation des moyens de renfort 76 de chaque aube 7, ceux-ci peuvent consister en une pièce de renfort 76a plate et rigide s'étendant le long de l'un des côtés latéraux 71' ou 72' de l'aube 7, autres que la petite base 72 ou la grande base 71, de préférence sensiblement perpendiculairement au plan concerné de l'aube 7.

Dans un deuxième mode de réalisation des moyens de renfort 76 de chaque aube 7, ceux-ci peuvent consister en deux pièces de renfort 76b et 76c en U fixées chacune, par la base du U, sur la pièce d'assemblage 70a de l'aube 7 et, par les ailes du U, sur l'une des grandes faces de l'aube 7.

Par ailleurs, afin de diminuer les pertes de rendement qui pourraient être provoquées par la pénétration dans l'eau des moyens de renfort 76 la présente invention peut prévoir en outre au moins une étrave 77 ou moyen analogue, de préférence fixée sur ou au niveau desdits moyens de renfort 76.

Dans une autre forme de réalisation, chaque aube 7 peut être réalisée en fonte moulée.

On notera que les pièces constitutives de la présente invention prévues pour être rapportées sur les aubes 7 ou sur la surface latérale de l'âme 1 peuvent l'être, préférentiellement, par vissage.

La présente invention a également pour objet une installation du type pompe ou centrale hydroélectrique comprenant une ou plusieurs vis d'Archimède, selon la présente invention, la ou chaque vis d'Archimède étant munie à chacune de ses extrémités d'un arbre de transmission 3, ladite installation comprenant au moins une auge 4 apte à recevoir la ou au moins l'une desdites vis d'Archimède et des paliers 5 et 6 aptes chacun à recevoir l'un des arbres de transmission 4 de la ou de l'une desdites vis d'Archimède en vue de permettre son maintien et sa rotation dans ladite auge 4. Le cas échéant, pour une installation du type pompe, celle-ci peut comprendre au moins un moteur 26 permettant d'entraîner la ou chaque vis d'Archimède en rotation (figure 13 et figure 14).

Par installation du type pompe, on entendra une installation du type pompe de relevage ou de convoyage de matériaux de toute sorte, liquides ou solides, tels que, par exemple, de l'eau, des émulsions plus ou moins liquide, du sable, des grains, des fruits ou encore des légumes.

Dans une configuration du type pompe de relevage, la vis selon la présente invention peut être inclinée (figures 13 et 14) afin de pouvoir transporter lesdits matériaux d'un point bas à un point haut, tandis que dans une configuration du type pompe de convoyage, c'est-à-dire servant uniquement à transporter des matériaux entre deux points de même niveau, dans un plan sensiblement horizontal ou d'un point haut à un point bas, la vis d'Archimède peut être orientée sensiblement horizontalement ou de façon inclinée.

Conformément à la présente invention, la ou chaque auge 4 est modulaire et démontable et présente une forme tubulaire cylindrique de section circulaire ou en arc de cercle réalisée à partir d'un assemblage de plaques incurvées rigides 24, de préférence du type tôle, de section transversale en arc de cercle, chaque plaque incurvée rigide 24 comportant des plis 25 parallèles entre eux et rapprochés l'un de l'autre lui conférant sa forme en arc de cercle.

Ainsi une vis d'Archimède selon la présente invention présente l'avantage de pouvoir être livré en pièces détachées de manière à réduire les frais de transport, contrairement aux vis d'Archimède actuelles. En outre, une pièce endommagée peut être facilement et rapidement remplacée par une autre si cela est nécessaire. Une pièce peut également être également remplacée rapidement par une autre pièce de caractéristiques différentes. Par exemple, le remplacement d'une aube 7 par une aube 7 de forme différente, permettant éventuellement de faire varier l'inclinaison du ou de chaque filet 2. La présente invention permet donc une grande adaptabilité aux évolutions souhaitées.

Les éléments constituant une vis d'Archimède selon la présente invention, peuvent être prévus pour être réalisés à partir de matériaux tels que le métal, l'acier, le plastique ou les composites. Toutefois, une préférence sera donnée à des matériaux métalliques, préférentiellement en acier, plus préférentiellement en acier inoxydable de manière à réduire les frais d'entretien.

On comprendra qu'une même dimension d'âme 1 d'une vis d'Archimède selon la présente invention peut supporter des aubes 7 de différentes dimensions.

D'autre part, toutes les pièces constitutives d'une vis d'Archimède selon la présente invention peuvent être réalisées chacune par découpe, par exemple du type laser, jet d'eau ou cisaille, ou par pliage, par exemple à l'aide d'une presse plieuse, ce qui permet une grande souplesse de fabrication et une adaptation facile aux différents diamètres de ladite vis d'Archimède qui sont nécessaires en fonction des débits d'eau à turbiner ou des débits d'eau à pomper.

Enfin, on entendra par démontable, dans le cadre de la présente invention, un démontage non destructif autorisant un remontage de l'objet démontable dans son état initial.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Vis d'Archimède comprenant une âme (1) de forme tubulaire délimitée latéralement par une surface de révolution ou surface latérale et au moins un filet (2) fixé autour de ladite âme (1) sur sa surface latérale, des moyens de maintien et de transmission (3), du type arbres de transmission, permettant le maintien et la rotation de ladite vis d'Archimède autour de son axe, ladite âme (1), éventuellement modulaire et démontable, présentant une section transversale circulaire ou polygonale,
vis d'Archimède **caractérisée en ce que** :
- le ou chaque filet (2) est modulaire et démontable et est constitué par une juxtaposition d'aubes (7) constituant chacune une portion du ou de l'un des filet(s) (2), chaque aube (7) présentant une étendue surfacique et un contour adaptés pour permettre la reconstitution du filet (2) à réaliser et comprenant une partie d'assemblage (70) permettant l'assemblage ou la liaison, de façon amovible, de l'aube (7) concernée avec la surface latérale de l'âme (1),
- des moyens de fixation permettent d'assurer une liaison complète rigide et démontable entre la partie d'assemblage (70) de chaque aube (7) et ladite surface latérale, ce directement sur ladite surface ou par l'intermédiaire d'un support (8) de fixation solidaire de cette dernière.

2. Vis d'Archimède, selon la revendication 1, **caractérisée en ce que** l'âme (1) est modulaire et démontable et présente une section transversale polygonale lui conférant une forme globalement prismatique droite, dont la surface latérale est composée de plusieurs faces latérales (11) sensiblement rectangulaires et **en ce que** ladite surface latérale est constituée par une juxtaposition d'éléments de surface latérale (9) ou tuiles, aptes à être fixés, de façon amovible, sur une armature (10), de préférence modulaire, chaque tuile (9) étant adaptée pour s'étendre, à l'état monté de l'âme (1), d'une part, longitudinalement, sur tout ou partie de la longueur de cette dernière et, d'autre part, latéralement, sur au moins l'une desdites faces latérales (11).

3. Vis d'Archimède, selon la revendication 2, **caractérisée en ce que** les moyens de fixation de la partie d'assemblage (70) de chaque aube (7) sur la surface latérale de l'âme (1) sont prévus pour assurer une pression de liaison entre ladite partie d'assemblage (70), la tuile (9) concernée et l'armature (10) qui comprend à cet effet une ou plusieurs surfaces réceptrices (13) aptes à recevoir lesdits moyens de fixation.

4. Vis, selon la revendication 2 ou la revendication 3, **caractérisée en ce que** chaque tuile (9) comprend au moins un pli (90a) ou (90b) délimitant des plans (91a), (91b), (91c) inclinés entre eux de manière que chaque tuile (9) puisse recouvrir ou s'étendre sur au moins une arête ou sommet formant l'intersection entre deux faces latérales (11) de l'âme de section polygonale.

5. Vis d'Archimède, selon l'une quelconque des revendications 2 à 4, **caractérisée en ce que** l'armature (10) est modulaire et démontable et présente la forme générale d'une cage d'écureuil et comprend, d'une part, une paire de flasques (12) portant chacun l'un desdits arbres de transmission (3) et présentant chacun un contour polygonal correspondant sensiblement au contour d'une section de l'âme (1), chaque flasque (12) polygonal étant prévu pour former l'une des extrémités de ladite âme (1) en s'étendant sensiblement perpendiculairement à l'axe de cette dernière et, d'autre part, des barres (13) de renfort et de maintien, ou autres éléments droits allongés et rigides, aptes à être montées chacune plus particulièrement au niveau de leurs extrémités, sur le contour polygonal desdits flasques (12), de préférence à proximité de chaque arête ou sommet dudit contour polygonal, lesdites barres (13) s'étendant, à l'état monté de la vis d'Archimède, perpendiculairement aux plans desdits flasques (12) et parallèlement à l'axe de l'âme (1).

6. Vis d'Archimède, selon la revendication 5, **caractérisée en ce que** l'âme (1) comprend en outre au moins une pièce intermédiaire (14), pleine ou ajourée, présentant un contour polygonal sensiblement de même forme et de même dimension que celui de l'âme (1) prismatique de section polygonale et **en ce que** les barres (13) de renfort et de maintien sont aptes à être montées également sur le contour polygonal de la ou de chaque pièce intermédiaire (14) disposée entre les deux flasques (12) d'extrémité.

7. Vis d'Archimède, selon l'une quelconque des revendications 5 à 6, **caractérisée en ce que** chaque barre (13) est un profilé de section transversale en forme de U et chaque flasque (12) et, le cas échéant, la ou chaque pièce intermédiaire (14), comporte des rainures (15), le cas échéant 15', de réception pratiquées dans leur contour polygonal, dé préférence à proximité d'une arête du contour concerné, parallèlement à cette dernière et **en ce que** lesdites rainures (15) sont aptes à recevoir chacune l'une des ailes desdits profilés (13) en U, en un point de ces derniers, avec le fond de chaque profilé en U appliqué contre le contour polygonal de l'un desdits flasques (12) ou, le cas échéant, de la ou de l'une desdites pièces intermédiaires (14).

8. Vis d'Archimède, selon l'une quelconque des revendications 2 à 4, **caractérisée en ce que** l'armature (10) est constituée, d'une part, par un noyau (16) rigide tubulaire de section transversale polygonale et d'axe formant l'axe de l'âme (1) et, d'autre part, par des ailettes (17) qui peuvent faire saillie radialement de la surface latérale dudit noyau (16) en s'étendant longitudinalement sur ce dernier, de préférence, de sorte que chaque bord longitudinal libre d'une ailette (17) puisse former l'un(e) des arêtes ou sommets de la surface latérale de l'âme (1) polygonale et **en ce que** le noyau (16) est réalisé à partir d'un assemblage d'éléments d'armature (18) rigides plats et pliés consistant chacun, de préférence, en une tôle pliée.

9. Vis d'Archimède, selon la revendication 8, **caractérisée en ce que** le bord longitudinal libre de chaque ailette (17) se prolonge par une surface d'appui et de fixation (19), l'ensemble desdites surfaces d'appui et de fixation (19) servant à la fixation des tuiles (9) prévues pour venir en appui sur lesdites surfaces d'appui et de fixation (19) et **en ce que** des moyens de fixation assurent une liaison complète, rigide et démontable entre lesdites tuiles (9) et lesdites surfaces d'appui et de fixation (19).

10. Vis d''Archimède, selon la revendication 9, **caractérisée en ce que** chaque élément d'armature (18), en forme de plaque ou de tôle, comprend trois plis longitudinaux (20a), (20b), (20c) parallèles entre eux s'étendant, à l'état monté, parallèlement à l'axe du noyau (16), à savoir un premier pli (20a) formant l'intersection entre un premier plan (21a) et un deuxième plan (21b) inclinés entre eux, un deuxième pli (20b) formant l'intersection entre le deuxième plan (21b) et un troisième plan (21c) inclinés entre eux, un troisième pli (20c) formant l'intersection entre le troisième plan (21c) et un quatrième plan (21 d) et **en ce que** le premier plan (21a) permet l'assemblage de l'un des éléments d'armature (18) ou premier élément d'armature (18) avec un autre élément d'armature (18), ou second élément d'armature (18), adjacent angulairement avec le premier élément d'armature (18), le deuxième plan (21b) forme l'une des faces du noyau (16), sur au moins une partie de la longueur de ce dernier, le troisième plan (21c) forme l'une des ailettes (17), sur au moins une partie de la longueur du noyau (16), tandis que le quatrième plan (21d) forme un retour, dont la face externe constitue l'une des surfaces d'appui et de fixation (19).

11. Vis d'Archimède, selon la revendication 1, **caractérisée en ce que** l'âme (1) présente la forme d'un tube cylindrique constitué par l'assemblage de plusieurs modules (1a), (1b), (1c) ou tronçons tubulaires cylindriques mis bout à bout et **en ce que** des moyens de fixation, tels que par exemple des vis ou analogues, assurent entre ces derniers une liaison complète rigide et démontable.

12. Vis d'Archimède, selon l'une quelconque des revendications 1 à 11, **caractérisée en ce que** chaque aube (7) présente une forme globalement trapézoïdale comportant deux cotés opposés à savoir un premier côté ou grande base (71) courbe de sorte à former une portion du contour courbe du filet (2) concerné et un deuxième côté ou petite base (72) rectiligne ou courbe et **en ce que** la partie d'assemblage (70) de chaque aube (7) s'étend au niveau ou à proximité de la petite base (72).

13. Vis d'Archimède, selon la revendication 12, **caractérisée en ce que** la partie d'assemblage de chaque aube (7) consiste soit en une pièce d'assemblage (70a) unique, de préférence plate et rigide, soit en plusieurs pièces d'assemblage (70b), de préférence plates et rigides, la ou chaque pièce d'assemblage (70a), (70b) étant intégrée dans ou rapportée et fixée sur l'aube (7) concernée, **en ce que** la ou chaque pièce d'assemblage (70a), (70b), d'une part, comprend une surface de contact et d'assemblage, droite ou courbe, apte à venir en appui contre la surface latérale de l'âme (1) et, d'autre part, comprend des trous de fixation (73) permettant le passage de moyens de fixation du type vis aptes à assurer une liaison complète, rigide et démontable entre la ou les pièces d'assemblage (70a) ou (70b) et la surface latérale de l'âme (1) comprenant des trous (23) de fixation aptes à recevoir lesdits moyens de fixation.

14. Vis d'Archimède, selon la revendication 12, **caractérisée en ce que** chaque aube (7) est fixée sur la surface latérale de l'âme (1) par l'intermédiaire du support (8) concerné qui comporte à cet effet au moins une face de fixation (80) s'étendant sensiblement perpendiculairement de la surface latérale de l'âme (1) et **en ce que** la partie d'assemblage (70) de chaque aube (7), d'une part, consiste en une surface de fixation (70c) intégrée dans cette dernière en s'étendant dans le plan de ladite aube (7) et, d'autre part, comprend des trous (73) de fixation permettant le passage de moyens de fixation du type vis aptes à assurer une liaison complète, rigide et démontable entre ladite surface de fixation (70c) et la face de fixation (80) correspondante du support (8) concerné qui comporte des trous (81) de fixation aptes à recevoir lesdits moyens de fixation.

15. Vis d'Archimède, selon l'une quelconque des revendications 12 à 14, **caractérisée en ce que** chaque aube (7) comporte un ou plusieurs plis (74a), (74b) délimitant plusieurs plans (75a), (75b), (75c) et le ou chaque pli (74a), (74b) s'étend linéairement depuis la petite base (72) jusqu'à la grande base (71) de l'aube (7) correspondante.

16. Vis d'Archimède, selon la revendication 15, **caractérisée en ce que** chaque aube (7) comprend deux plis (74a), (74b) s'étendant l'un de l'autre depuis chaque extrémité de la petite base (72) de l'aube (7) correspondante en convergeant l'un vers l'autre à proximité de la grande base (71) de ladite aube (7).

17. Vis d'Archimède, selon l'une quelconque des revendications 1 à 14, **caractérisée en ce que** les aubes (7) sont réalisés en fonte moulée.

18. Installation du type pompe ou centrale hydroélectrique mettant en oeuvre une ou plusieurs vis d'Archimède, selon l'une quelconque des revendications 1 à 17, la ou chaque vis d'Archimède étant munie à chacune de ses extrémités d'un arbre de transmission (3), ladite installation comprenant au moins une auge (4) apte à recevoir la ou au moins l'une desdites vis d'Archimède et deux paliers (5), (6) aptes chacun à recevoir l'un des arbres de transmission (4) de la ou de l'une desdites vis d'Archimède en vue de permettre son maintien et sa rotation dans ladite auge (4) et, le cas échéant, au moins un moteur (26) permettant d'entraîner la ou chaque vis d'Archimède en rotation,
installation **caractérisée en ce que** la ou chaque auge (4) est modulaire et démontable et présente une forme tubulaire cylindrique de section circulaire ou en arc de cercle réalisée à partir d'un assemblage de plaques incurvées rigides (24), de préférence du type tôle, de section transversale en arc de cercle, chaque plaque incurvée rigide (24) comportant des plis (25) parallèles entre eux et rapprochés l'un de l'autre lui conférant sa forme en arc de cercle.

## Patentansprüche

1. Archimedische Schraube, die einen rohrförmigen Kern (1), der seitlich durch eine Umdrehungsoberfläche oder Seitenfläche begrenzt ist, und mindestens ein Gewinde (2) aufweist, das um den genannten Kern (1) an dessen Seitenfläche befestigt ist, wobei Halte- und Antriebsmitteln (3) vom Typ Antriebswellen das Halten und die Drehung der genannten archimedischen Schraube um ihre Achse ermöglichen, wobei der genannte Kern (1), der gegebenenfalls modular und demontierbar ist, einen kreisförmigen oder polygonalen Querschnitt aufweist,
wobei die archimedische Schraube **dadurch gekennzeichnet ist, dass**:
- das oder jedes Gewinde (2) modular und demontierbar ist und aus einer Aneinanderreihung von Schaufeln (7) gebildet ist, welche jeweils einen Teil des Gewindes oder eines der Gewinde (2) bilden, wobei jede Schaufel (7) eine flächige Ausdehnung und eine Kontur aufweist, die dazu ausgebildet sind, die Rekonstruktion des herzustellenden Gewindes (2) zu ermöglichen, und einen Verbindungsabschnitt (70), der den lösbaren Zusammenbau oder die lösbare Verbindung der betreffenden Schaufel (7) mit der Seitenfläche des Kerns (1) ermöglicht, umfasst,
- Befestigungsmittel eine vollständige, starre und demontierbare Verbindung zwischen dem Verbindungsabschnitt (70) jeder Schaufel (7) und der genannten Seitenfläche ermöglichen, dies unmittelbar an der genannten Fläche oder mittels eines Befestigungsträgers (8), der mit letzterer fest verbunden ist.

2. Archimedische Schraube nach Anspruch 1, **dadurch gekennzeichnet, dass** der Kern (1) modular und demontierbar ist und einen polygonalen Querschnitt aufweist, was dem Kern eine insgesamt gerade, prismatische Form verleiht, dessen Seitenfläche aus mehreren im Wesentlichen rechteckigen seitlichen Flächen (11) gebildet ist, und dadurch, dass die genannte Seitenfläche aus einer Aneinanderreihung von seitlichen Flächenelementen (9) oder Platten gebildet ist, die dazu ausgebildet sind, lösbar auf einem vorzugsweise modularen Gerüst (10) befestigt zu werden, wobei jede Platte (9) dazu ausgebildet ist, im montierten Zustand des Kerns (1) sich einerseits in Längsrichtung über die gesamte oder einen Teil der Länge desselben und andererseits seitlich auf mindestens einer der genannten seitlichen Flächen (11) zu erstrecken.

3. Archimedische Schraube nach Anspruch 2, **dadurch gekennzeichnet, dass** die Befestigungsmittel des Verbindungsabschnitts (70) jeder Schaufel (7) auf der Seitenfläche des Kerns (1) dazu vorgesehen sind, einen Verbindungsdruck zwischen dem genannten Verbindungsabschnitt (70), der betreffende Platte (9) und dem Gerüst (10) zu gewährleisten, welches Gerüst zu diesem Zweck eine oder mehrere Aufnahmeflächen (13), die für eine Aufnahme der genannten Befestigungsmittel geeignet sind, aufweist.

4. Archimedische Schraube nach Anspruch 2 oder 3, **dadurch gekennzeichnet, dass** jede Platte (9) mindestens eine Abwinkelung oder Falte (90a) oder (90b) aufweist, die Ebenen (91a), (91b), (91c) abgrenzt, welche derart gegeneinander geneigt sind, dass jede Platte (9) mindestens eine Kante oder einen Scheitel, die oder der eine Schnittlinie zwischen zwei seitlichen Flächen (11) des Kerns mit polygonalem Querschnitt bildet, abdecken oder sich darüber erstrecken kann.

5. Archimedische Schraube nach einem der Ansprüche 2 bis 4, **dadurch gekennzeichnet, dass** das Gerüst (10) modular und demontierbar ist und allgemein eine Form eines Laufrads besitzt und einerseits ein Paar Flanschen (12) aufweist, von denen jeder eine der genannten Antriebswellen (3) trägt und jeder eine polygonale Kontur aufweist, die im Wesentlichen der Kontur eines Querschnitts des Kerns (1) entspricht, wobei jeder polygonale Flansch (12) dazu vorgesehen ist, eines der Endstücke des genannten Kerns (1) zu bilden, indem er sich im Wesentlichen senkrecht zur Achse des letzteren erstreckt, und andererseits Verstärkungs- und Befestigungsstäbe (13) oder andere geradlinige, längliche und starre Elemente, die dazu geeignet sind, insbesondere im Bereich ihrer Enden auf der polygonalen Kontur der genannten Flanschen (12) montiert zu sein, vorzugsweise in der Nähe jeder Kante oder jedes Scheitels der genannten polygonalen Kontur, wobei die genannten Stäbe (13) im montierten Zustand der archimedischen Schraube sich senkrecht zu den Ebenen der genannten Flanschen (12) und parallel zur Achse des Kerns (1) erstrecken.

6. Archimedische Schraube nach Anspruch 5, **dadurch gekennzeichnet, dass** der Kern (1) zusätzlich mindestens ein Zwischenteil (14) aufweist, das vollflächig oder durchbrochen ausgebildet ist und das eine polygonale Kontur von im Wesentlichen gleicher Form und Größe aufweist wie der prismatische Kern (1) mit polygonalem Querschnitt, und dadurch, dass die Verstärkungs- und Befestigungsstäbe (13) dazu ausgebildet sind, auch an der polygonalen Kontur des oder jedes Zwischenteils (14), das zwischen den beiden endständigen Flanschen (12) angeordnet ist, montiert zu sein.

7. Archimedische Schraube nach einem der Ansprüche 5 bis 6, **dadurch gekennzeichnet, dass** jeder Stab (13) ein Profil mit U-förmigem Querschnitt ist und jeder Flansch (12) und gegebenenfalls das oder jedes Zwischenteil (14) Aufnahmenuten (15) und gegebenenfalls 15' aufweist, die in dessen polygonaler Kontur, vorzugsweise in der Nähe einer Kante der betreffenden Kontur, parallel zu letzterer ausgebildet sind, und dadurch, dass die genannten Nuten (15) jeweils zur Aufnahme einer der Schenkel der genannten U-profilierten Stäbe (13) an einer Stelle letzterer geeignet sind, wobei der Boden jedes U-profilierten Stabs gegen die polygonale Kontur eines der genannten Flanschen (12) oder gegebenenfalls des einen Zwischenteils (14) oder eines der genannten Zwischenteile (14) in Anlage gebracht ist.

8. Archimedische Schraube nach einem der Ansprüche 2 bis 4, **dadurch gekennzeichnet, dass** das Gerüst (10) einerseits aus einem rohrförmigen, starren Innenteil (16) mit einem polygonalen Querschnitt und einer Achse gebildet ist, welche die Achse der Kerns (1) bildet, und andererseits aus Flügeln (17), die radial aus der Seitenfläche des genannten Kerns (16) herausragen können, indem diese sich in dessen Längsrichtung erstrecken, sodass vorzugsweise jeder freie Längsrand eines Flügels (17) eine der Kanten oder einen der Scheitel der Seitenfläche des polygonalen Kerns (1) bilden kann, und dadurch, dass das Innenteil (16) aus einer Zusammenfügung von starren, flachen und abgewinkelten Gerüstelementen (18) gebildet ist, wovon jedes vorzugsweise aus einem abgewinkelten Blech gebildet ist.

9. Archimedische Schraube nach Anspruch 8, **dadurch gekennzeichnet, dass** der freie Längsrand jedes Flügels (17) sich durch eine Stütz- und Befestigungsfläche (19) verlängert, wobei die Gesamtheit der genannten Stütz- und Befestigungsflächen (19) zur Befestigung der Platten (9) dienen, welche Platten dazu vorgesehen sind, sich auf den genannten Stütz- und Befestigungsflächen (19) abzustützen, und dadurch, dass Befestigungsmittel eine vollständige, starre und demontierbare Verbindung zwischen den genannten Platten (9) und den genannten Stütz- und Befestigungsflächen (19) sicherstellen.

10. Archimedische Schraube nach Anspruch 9, **dadurch gekennzeichnet, dass** jedes Gerüstelement (18), das in Form einer Platte oder eines Blechs ausgebildet ist, drei zueinander parallel verlaufende Längsabwinkelungen oder Längsfalten (20a), (20b), (20c) aufweist, welche sich im montierten Zustand parallel zur Achse des Innenteils (16) erstrecken, wobei eine erste Falte (20a) die Schnittlinie zwischen einer ersten Ebene (21 a) und einer zweiten Ebene (21 b) bildet, die zueinander geneigt sind, wobei eine zweite Falte (20b) die Schnittlinie zwischen der zweiten Ebene (21 b) und einer dritte Ebene (21 c) bildet, die zueinander geneigt sind, wobei eine dritte Falte (20c) die Schnittlinie zwischen der dritten Ebene (21c) und einer vierten Ebene (21 d) bildet, und dadurch, dass die erste Ebene (21a) den Zusammenbau eines der Gerüstelemente (18), eines sogenannten ersten Gerüstelements (18), mit einem anderen Gerüstelement (18), einem sogenanntem zweiten Gerüstelement (18), das winkelmäßig benachbart zu dem ersten Gerüstelement (18) angeordnet ist, ermöglicht, wobei die zweite Ebene (21 b) eine der Seiten des Innenteils (16) bildet, zumindest über einen Teil der Länge des letzteren, wobei die dritte Ebene (21c) einen der Flügel (17) bildet, zumindest über einen Teil der Länge des Innenteils (16), während die vierte Ebene (21d) eine Umbiegung bildet, deren äußere Seite eine der Stütz- und Befestigungsflächen (19) bildet.

11. Archimedische Schraube nach Anspruch 1, **dadurch gekennzeichnet, dass** der Kern (1) die Form eines zylindrischen Rohrs aufweist, das aus einem Zusammenbau von mehreren Modulen (1a), (1b), (1c) oder zylindrischen Rohrteilstücken gebildet ist, die aneinandergefügt sind, und dadurch, dass Befestigungsmittel, wie beispielsweise Schrauben oder dergleichen, eine vollständige, starre und demontierbare Verbindung zwischen den Modulen oder Rohrteilstücken gewährleisten.

12. Archimedische Schraube nach einem der Ansprüche 1 bis 11, **dadurch gekennzeichnet, dass** jede Schaufel (7) im Wesentlichen eine Trapezform aufweist, die zwei gegenüberliegende Seiten aufweist, nämlich eine auch als große Basis (71) bezeichnete erste Seite, die gekrümmt ist, sodass sie einen Teil der gekrümmten Kontur des betreffenden Gewindes (2) bildet, und eine auch als kleine Basis (72) bezeichnete zweite Seite, die geradlinig oder gekrümmt ist, und dadurch, dass der Verbindungsabschnitt (70) jeder Schaufel (7) sich auf der Höhe oder in der Nähe der kleinen Basis (72) erstreckt.

13. Archimedische Schraube nach Anspruch 12, **dadurch gekennzeichnet, dass** der Verbindungsabschnitt jeder Schaufel (7) entweder aus einem einzelnen, vorzugsweise flachen und starren Verbindungsteil (70a) oder aus mehreren, vorzugsweise flachen und starren Verbindungsteilen (70b) gebildet ist, wobei das oder jedes Verbindungsteil (70a), (70b) in die betreffende Schaufel (7) integriert oder an der betreffenden Schaufel angebracht und fixiert ist, und dadurch, dass das oder jedes Verbindungsteil (70a), (70b) einerseits eine Kontakt- und Zusammenbaufläche, die gerade oder gekrümmt ausgebildet ist und die dazu ausgebildet ist, sich gegen die Seitenfläche des Kerns (1) abzustützen, und andererseits Fixierungslöcher (73) aufweist, die den Durchgang von Verbindungsmitteln vom Typ Schraube ermöglichen, die für eine vollständige, starre und demontierbare Verbindung zwischen dem Verbindungsteil oder den Verbindungsteilen (70a) oder (70b) und der Seitenfläche des Kerns (1) geeignet sind, welche Seitenfläche Fixierungslöcher (23) aufweist, die für die Aufnahme der genannten Verbindungsmittel geeignet sind.

14. Archimedische Schraube nach Anspruch 12, **dadurch gekennzeichnet, dass** jede Schaufel (7) auf der Seitenfläche des Kerns (1) mittels des betreffenden Trägers (8) fixiert ist, der zu diesem Zweck mindestens eine Befestigungsseite (80) aufweist, welche sich im Wesentlichen senkrecht zur Seitenfläche des Kerns (1) erstreckt, und dadurch, dass der Verbindungsabschnitt (70) jeder Schaufel (7) einerseits aus einer Verbindungsfläche (70c) besteht, die in letztgenannte integriert ist, indem diese sich in der Ebene der genannten Schaufel (7) erstreckt, und andererseits Fixierungslöcher (73) aufweist, die den Durchgang von Verbindungsmitteln vom Typ Schraube ermöglichen, die für eine vollständige, starre und demontierbare Verbindung zwischen der genannten Verbindungsfläche (70c) und der entsprechenden Befestigungsseite (80) des betreffenden Trägers (8) geeignet sind, welcher Träger Fixierungslöcher (81) aufweist, die für die Aufnahme der genannten Verbindungsmittel geeignet sind.

15. Archimedische Schraube nach einem der Ansprüche 12 bis 14, **dadurch gekennzeichnet, dass** jede Schaufel (7) eine oder mehrere Abwinkelungen oder Falten (74a), (74b) aufweist, die mehrere Flächen (75a), (75b), (75c) begrenzen, und dass die Abwinkelung oder Falte oder jede Abwinklung oder Falte (74a), (74b) sich geradlinig von der kleinen Basis (72) bis zu der großen Basis (71) der entsprechenden Schaufel (7) erstreckt.

16. Archimedische Schraube nach Anspruch 15, **dadurch gekennzeichnet, dass** jede Schaufel (7) zwei Abwinkelungen oder Falten (74a), (74b) aufweist, die sich jeweils von einem Endpunkt der kleinen Basis (72) der entsprechenden Schaufel (7) erstrecken und in der Nähe der großen Basis (71) der genannten Schaufel (7) konvergieren.

17. Archimedische Schraube nach einem der Ansprüche 1 bis 14, **dadurch gekennzeichnet, dass** die Schaufeln (7) aus Gusseisen gebildet sind.

18. Anlage vom Typ Pumpe oder Wasserkraftwerk, die eine oder mehrere archimedische Schrauben nach einem der Ansprüche 1 bis 17 einsetzt, wobei die oder jede archimedische Schraube an jedem ihrer Enden eine Antriebswelle (3) aufweist, wobei die genannte Anlage mindestens eine Rinne (4) aufweist, die zur Aufnahme der archimedischen Schraube oder mindestens einer der genannten archimedischen Schrauben geeignet ist, und zwei Lager (5), (6), die jeweils für die Aufnahme einer der Antriebswellen (4) der archimedischen Schraube oder einer der genannten archimedischen Schrauben geeignet sind, um ihre Lagerung und Drehung in der genannten Rinne (4) zu ermöglichen, und gegebenenfalls mindestens einen Motor (26), der einen Rotationsantrieb der oder jeder archimedischen Schraube ermöglicht,
wobei die Anlage **dadurch gekennzeichnet ist, dass** die oder jede Rinne (4) modular und demontierbar ist und eine zylindrische, rohrähnliche Form mit kreisförmigem oder kreisbogenförmigem Querschnitt aufweist, die als ein Zusammenbau von starren, gekrümmten Platten (24), vorzugsweise vom Typ Blech, mit kreisbogenförmigem Querschnitt hergestellt ist, wobei jede starre, gekrümmte Platte (24) Abwinkelungen oder Falten (25) aufweist, die parallel zu einander und eng benachbart verlaufen und ihr ihre kreisbogenförmige Form verleihen.

## Claims

1. Archimedes screw comprising a core (1) with a tubular form delimited laterally by a revolving surface or lateral surface and at least one thread (2) fixed around said core (1) on its lateral surface, support and transmission means (3) of the transmission shaft type allowing the support and rotation of said Archimedes screw about its axis, said core (1), possibly being modular and detachable, having a circular or polygonal cross-section,
the Archimedes screw being **characterised in that**:
- the or each thread (2) is modular and detachable and is formed by a juxtaposition of blades (7) each forming a portion of the thread or one of the threads (2), each blade (7) having an adapted surface extension and contour to enable the reformation of the thread (2) to be formed and comprising an assembly part (70) enabling the assembly or the connection in a removable manner of the blade (7) concerned to the lateral surface of the core (1),
- fixing means making it possible to ensure a complete, rigid and detachable connection between the assembly part (70) of each blade (7) and said lateral surface, the latter directly on said surface or by means of a fixing support (8) joined to the latter.

2. Archimedes screw according to claim 1, **characterised in that** the core (1) is modular and detachable and has a polygonal transverse cross-section, giving it overall a straight prismatic form, the lateral surface of which is composed of a plurality of lateral faces (11) which are substantially rectangular and **in that** said lateral surface is formed by a juxtaposition of lateral surface elements (9) or tiles, which are able to be fixed in a removable manner onto an armature (10), preferably modular, each tile (9) being adapted to extend in the assembled state of the core (1) on the one hand longitudinally over all or part of the length of the latter and on the other hand laterally over at least one of said lateral faces (11).

3. Archimedes screw according to claim 2, **characterised in that** the fixing means of the assembly part (70) of each blade (7) on the lateral surface of the core (1) are provided to ensure connecting pressure between said assembly part (70), the tile (9) concerned and the armature (10) which comprises for this purpose one or more receiving surfaces (13) able to receive said fixing means.

4. Archimedes screw according to claim 2 or claim 3, **characterised in that** each tile (9) comprises at least one fold (90a) or (90b) delimiting planes (91a), (91b) and (91c) which are inclined relative to one another such that each tile (9) can cover or extend over at least one ridge or peak forming the intersection between two lateral faces (11) of the core with a polygonal cross-section.

5. Archimedes screw according to any one of claims 2 to 4, **characterised in that** the armature (10) is modular and detachable and has the general shape of a squirrel cage and comprises on the one hand a pair of flanges (12) each supporting one of said transmitting shafts (3) and each having a polygonal contour corresponding substantially to the contour of a section of the core (1), each polygonal flange (12) being provided to form one of the ends of said core (1) by extending substantially perpendicularly to the axis of the latter and on the other hand reinforcing and supporting rods (13), or other elongated and rigid straight elements, which are each able to be mounted in particular at their ends on the polygonal contour of said flanges (12), preferably in the proximity of each ridge or peak of said polygonal contour, said rods (13) extending in the mounted state of the Archimedes screw perpendicularly to the planes of said flanges (12) and parallel to the axis of the core (1).

6. Archimedes screw according to claim 5, **characterised in that** the core (1) also comprises at least one intermediate part (14), which is either solid or perforated, having a polygonal contour substantially with the same shape and same dimension as that of the prismatic core (1) with a polygonal cross-section and **in that** the reinforcing and supporting rods (13) are also able to be mounted on the polygonal contour of the or each intermediate part (14) arranged between the two end flanges (12).

7. Archimedes screw according to any one of claims 5 to 6, **characterised in that** each rod (13) is a profile with a U-shaped cross-section and each flange (12) and, if necessary, the or each intermediate part (14) comprises receiving grooves (15), if necessary (15') formed in their polygonal contour, preferably in the proximity of a ridge of the contour concerned parallel to the latter and **in that** said grooves (15) are each able to receive one of the vanes of said U-shaped profiles (13) in a point of the latter, with the base of each U-shaped profile being applied against the polygonal contour of one of said flanges (12) or, if necessary of the or one said intermediate parts (14).

8. Archimedes screw according to any one of claims 2 to 4, **characterised in that** the armature (10) is formed on the one hand by a rigid tubular core (16) with a polygonal cross-section and with an axis forming the axle of the core (1) and on the other hand by vanes (17) which can project radially from the lateral surface of said core (16) by extending longitudinally over the latter, preferably such that each free longitudinal edge of a vane (17) can form either ridges or peaks of the lateral surface of the polygonal core (1) and **in that** the core (16) formed by an assembly of rigid flat and folded armature elements (18) each consisting preferably of folded sheet metal.

9. Archimedes screw according to claim 8, **characterised in that** the free longitudinal edge of each vane (17) is extended by a bearing and fixing surface (19), the assembly of said bearing and fixing surfaces (19) being used for fixing tiles (9) provided which are applied to said bearing and fixing surfaces (19) and **in that** fixing means ensure the complete, rigid and detachable connection between said tiles (9) and said bearing and fixing surfaces (19).

10. Archimedes screw according to claim 9, **characterised in that** each armature element (18), in the form of a plate or sheet metal, comprises three mutually parallel longitudinal folds (20a), (20b) and (20c) extending in the assembled state parallel to the axis of the core (16), namely a first fold (20a) forming the intersection between a first plane (21a) and a second plane (21b) inclined relative to one another, a second fold (20b) forming the intersection between the second plane (21b) and a third plane (21 c) inclined relative to one another, a third fold (20c) forming the intersection between the third plane (21c) and a fourth plane (21d) and **in that** the first plane (21a) enables the assembly of one of the armature elements (18) or the first armature element (18) with another armature element (18), or second armature element (18), angularly adjacent to the first armature element (18), the second plane (21b) forms one of the faces of the core (16) over at least a portion of the length of the latter, the third plane (21c) forms one of the vanes (17) over at least a portion of the length of the core (16), whereas the fourth plane (21d) forms a return, the external face of which forms one of the bearing and fixing surfaces (19).

11. Archimedes screw according to claim 1, **characterised in that** the core (1) has the form of a cylindrical tube formed by the assembly of a plurality of modules (1a), (1b) and (1c) or tubular cylindrical sections placed end to end and **in that** fixing means, such as for example screws or the like, ensure a complete rigid and detachable connection between the latter.

12. Archimedes screw according to any one of claims 1 to 11, **characterised in that** each blade (7) has an overall trapezoidal shape comprising two opposite sides, namely a first side or large base (71) curved to form a portion of the curved contour of the thread (2) concerned and a second straight or curved side or small base (72) and **in that** the assembly part (70) of each blade (7) extends at the level of or in the proximity of the small base (72).

13. Archimedes screw according to claim 12, **characterised in that** the assembly part of each blade (7) consists either of a single assembly part (70a), preferably flat and rigid, or a plurality of assembly parts (70b), preferably flat and rigid, the or each assembly part (70a) or (70b) being integrated into or attached and fixed onto the blade (7) concerned, **in that** the or each assembly part (70a), (70b) on the one hand comprises a contact and assembly surface, which is straight or curved and able to bear against the lateral surface of the core (1) and on the other hand comprises fixing holes (73) enabling the passage of fixing means of the screw type able to ensure a complete, rigid and detachable connection between the assembly part or parts (70a) or (70b) and the lateral surface of the core (1) comprising fixing holes (23) able to receive said fixing means.

14. Archimedes screw according to claim 12, **characterised in that** each blade (7) is fixed onto the lateral surface of the core (1) by means of the support (8) concerned which comprises for this purpose at least one fixing surface (80) extending substantially perpendicularly relative to the lateral surface of the core (1) and **in that** the assembly part (70) of each blade (7) consists on the one hand of a fixing surface (70c) integrated into the latter by extending in the plane of said blade (7) and on the other hand comprises fixing holes (73) allowing the passage of fixing means of the screw type which are able to ensure a complete, rigid and detachable connection between said fixing surface (70c) and the corresponding fixing surface (80) of the support (8) concerned which comprises fixing holes (81) able to receive said fixing means.

15. Archimedes screw according to any one of claims 12 to 14, **characterised in that** each blade (7) comprises one or more folds (74a) and (74b) delimiting a plurality of planes (75a), (75b) and (75c) and the or each fold (74a) or (74b) extends linearly from the small base (72) up to the large base (71) of the corresponding blade (7).

16. Archimedes screw according to claim 15, **characterised in that** each blade (7) comprises two folds (74a) and (74b) each extending from each end of the small base (72) of the corresponding blade (7) by converging towards one another in the proximity of the large base (71) of said blade (7).

17. Archimedes screw according to any one of claims 1 to 14, **characterised in that** the blades (7) are made from cast iron.

18. Installation of the pump or hydroelectric power station type implementing one or more Archimedes screws, according to any one of claims 1 to 17, the or each Archimedes screw being provided at each of its ends with a transmission shaft (3), said installation comprising at least one trough (4) capable of receiving the or at least one of said Archimedes screws and two bearings (5) and (6) each able to receive one of the transmission shafts (3) of the or one of said Archimedes screws in order to enable its maintenance and rotation in said trough (4) and, if necessary, at least one motor (26) making it possible to drive the or each Archimedes screw in rotation,
the installation being **characterised in that** the or each trough (4) is modular and detachable and has a tubular cylindrical shape with a circular cross-section or arc of a circle made from an assembly of rigid curved panels (24), preferably of the sheet metal type, with a transverse cross-section in the form of an arc of a circle, each rigid curved panel (24) comprising parallel layers (25) and arranged close to one another giving it the form of an arc of a circle.
